(19) **Europäisches Patentamt**
**European Patent Office**
**Office européen des brevets**

(11) **EP 4 198 902 B1**

(12) **EUROPÄISCHE PATENTSCHRIFT**

(45) Veröffentlichungstag und Bekanntmachung des Hinweises auf die Patenterteilung:
**21.05.2025   Patentblatt 2025/21**

(51) Internationale Patentklassifikation (IPC):
*G06T 11/00* (2006.01)

(21) Anmeldenummer: **21215485.0**

(52) Gemeinsame Patentklassifikation (CPC):
**G06T 11/006;** G06T 2211/412

(22) Anmeldetag: **17.12.2021**

(54) **VERFAHREN UND SYSTEM ZUR BEWEGUNGSKOMPENSATION BEI DER CT-REKONSTRUKTION**

METHOD AND SYSTEM FOR MOTION COMPENSATION IN CT RECONSTRUCTION

PROCÉDÉ ET SYSTÈME DE COMPENSATION DU MOUVEMENT DANS LA RECONSTRUCTION CT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.06.2023   Patentblatt 2023/25**

(73) Patentinhaber: **Siemens Healthineers AG**
**91301 Forchheim (DE)**

(72) Erfinder:
• **Schöndube, Harald**
  **91056 Erlangen (DE)**
• **Steinich, Nora**
  **91301 Forchheim (DE)**
• **Sunnegaardh, Johan**
  **91052 Erlangen (DE)**

(74) Vertreter: **Siemens Healthineers**
**Patent Attorneys**
**Postfach 22 16 34**
**80506 München (DE)**

(56) Entgegenhaltungen:
• JANG SEOKHWAN ET AL: "Head Motion Correction Based on Filtered Backprojection in Helical CT Scanning", IEEE TRANSACTIONS ON MEDICAL IMAGING, IEEE, USA, vol. 39, no. 5, 15 November 2019 (2019-11-15), pages 1636 - 1645, XP011785806, ISSN: 0278-0062, [retrieved on 20200430], DOI: 10.1109/TMI.2019.2953974
• SCHÄFER D ET AL: "Motion-Compensated and Gated Cone Beam Filtered Back-Projection for 3-D Rotational X-Ray Angiography", IEEE TRANSACTIONS ON MEDICAL IMAGING, IEEE, USA, vol. 25, no. 7, July 2006 (2006-07-01), pages 898 - 906, XP001545922, ISSN: 0278-0062, DOI: 10.1109/TMI.2006.876147

**Beschreibung**

Die Erfindung betrifft ein Verfahren und ein System zur Bewegungskompensation bei der CT-Rekonstruktion, also der Rekonstruktion von Schichtbildern bei einer Computertomographie (CT), insbesondere unter Berücksichtigung eines Re-Binning Prozesses.

Bewegungen während der Bildaufnahme in einem CT-Scan verursachen Artefakte, welche die Bildqualität gravierend verschlechtern und den diagnostischen Wert der resultierenden Bilder verringern können. Die Bewegung führt zu einer Inkonsistenz der erfassten Daten und damit zu Artefakten wie Unschärfe, Schlieren oder Geisterbildern.

Häufig ist diese Bewegung eine Patientenbewegung. Patientenbewegungen können unwillkürliche Bewegungen wie Organbewegungen oder Tremor sein, aber auch willkürliche Bewegungen beispielsweise bei nicht kooperativen Patienten, in Notfällen oder in der pädiatrischen Bildgebung. Die Artefakte können aber auch durch Bewegungen des Scanners selbst entstehen, beispielsweise bei mobilen CT-Systemen z.B. mit einer beweglichen oder verschiebbaren Gantry.

Die ideale Lösung für das Problem wäre eine vollständige Verhinderung jeglicher Form von Bewegung während des Scans, was leider in der Regel keine realistische Option darstellt. Daher ist eine Lösung erforderlich, welche durch eine Bewegung verursachte Artefakte kompensieren und die Bildqualität verbessern kann.

Eine häufig verwendete Methode zur Bewegungskompensation bei der CT-Rekonstruktion ist die von Schäfer et al. ("Motioncompensated and gated cone beam filtered back-projection for 3-D rotational X-ray angiography," in IEEE Transactions on Medical Imaging, vol. 25, no. 7, pp. 898-906; Juli 2006). Das dort vorgeschlagene Verfahren basiert auf der Annahme, dass die während des CT-Scans vorhandene Bewegung bekannt ist. Die Bewegungskorrektur wird im Rekonstruktionsprozess während des Rückprojektionsschritts angewendet. Jedes Voxel (dreidimensionaler Bildpunkt) des zu rekonstruierenden Volumens wird virtuell entsprechend der im Moment der Aufnahme vorliegenden Bewegung verschoben. In dieser Methode ist der Rekonstruktionsalgorithmus von Feldkamp, David und Kress eingeschlossen ("Practical cone-beam algorithm," J. Opt. Soc. Am. A 1, 612-619; 1984). Die Methode von Schäfer et al. wird häufig als Bewegungskompensationsverfahren verwendet, nachdem neue Bewegungsschätzungsverfahren für CT-Scans vorgeschlagen wurden, wie zum Beispiel von Bruder et al. ("Compensation of skull motion and breathing motion in CT using data-based and image-based metrics, respectively", Proc. SPIE 9783, Medical Imaging 2016: Physics of Medical Imaging, 97831E; 22. März 2016).

Ein weiteres Verfahren zur Bewegungskompensation bei der CT-Rekonstruktion basiert auf der partiellen Winkelrekonstruktion (s. J. Hahn et al. "Motion compensation in the region of the coronary arteries based on partial angle reconstructions from short-scan CT data. Medical physics, 44(11); 2017). Bei diesem wird die Bewegungskompensation separat an mehreren Partialwinkelrekonstruktionen durchgeführt, bei denen es sich um unvollständige Rekonstruktionen aus einer Teilmenge der Daten handelt. Die vollständige bewegungskompensierte Rekonstruktion wird durch Kombinieren der bewegungskompensierten Partialwinkelrekonstruktionen erhalten. Die Bewegungskompensation selbst erfolgt sehr ähnlich der Methode von Schäfer et al., indem das Voxelvolumen entsprechend der vorliegenden Bewegung bewegt wird.

Der Nachteil der Rekonstruktionsverfahren besteht jedoch darin, dass bei Kombination mit Rekonstruktionsalgorithmen, die einen Re-Binning Schritt beinhalten, Artefakte verbleiben, welche die Qualität des Bewegungskompensationsergebnisses verringern.

JANG SEOKHWAN ET AL: "Head Motion Correction Based on Filtered Backprojection in Helical CT Scanning", IEEE TRANSACTIONS ON MEDICAL IMAGING, IEEE, USA, Bd. 39, Nr. 5, 15. November 2019, Seiten 1636-1645, XP011785806, offenbart ein Verfahren zur Kopfbewegungskorrektur bei einem Spiral-CT-Scan.

Es ist eine Aufgabe der vorliegenden Erfindung, ein Verfahren und ein entsprechendes System zur Bewegungskompensation bei der CT-Rekonstruktion anzugeben, mit dem die oben beschriebenen Nachteile vermieden werden und insbesondere auch eine optimale Bewegungskompensation nach einem Re-Binning ermöglicht wird.

Diese Aufgabe wird durch ein Verfahren gemäß Patentanspruch 1, ein System gemäß Patentanspruch 10, eine Steuereinrichtung nach Patentanspruch 11 sowie durch ein Computertomographiesystem gemäß Patentanspruch 12 gelöst.

Das erfindungsgemäße Verfahren zur Bewegungskompensation bei der CT-Rekonstruktion umfasst die folgenden Schritte:

- Bereitstellen von Projektionsbildern eines CT-Scans,
- Erstellen von Zwischenbildern, wobei die Zwischenbilder aus einem Re-Binning von Spalten der Projektionsbilder erstellt werden,
- Berechnen von Schichtbildern mittels einer Rückprojektion der Zwischenbilder auf vorbestimmte Voxel der Schichtbilder, wobei für jedes Zwischenbild und für jedes Voxel basierend auf einem vorgegebenen Bewegungsprofil (mit Bewegungsdaten) der Voxel während der Aufnahme der Projektionsbilder die folgenden Schritte durchgeführt werden:

a) Auswahl eines Initial-Bewegungszustands basierend auf dem Zwischenbild,

b) Berechnung einer Referenz-Voxelposition des Voxels aus dessen ursprünglicher Voxelposition und aus dem Bewegungsprofil (also mit den Bewegungsdaten des Bewegungsprofils) zu dem Initial-Bewegungszustand,

c) Berechnung einer Spalten-Bildposition, an der das Voxel an der Referenz-Voxelposition im Zwischenbild abgebildet würde,

d) Ermittlung eines geänderten Bewegungszustandes des Voxels basierend auf der berechneten Spalten-Bildposition,

e) Berechnung einer geänderten Voxelposition des Voxels aus dessen ursprünglicher Voxelposition und dem Bewegungsprofil zu dem geänderten Bewegungszustand,

f) Berechnung einer geänderten Bildposition, an der das Voxel an der geänderte Voxelposition im Zwischenbild abgebildet würde,

g) Verwendung eines Bildwerts des Zwischenbildes an der geänderten Bildposition für die Rückprojektion.

Die Bereitstellung von Projektionsbildern eines CT-Scans kann durch die Aufnahme der Bilder mit einem CT-Scanner erfolgen, durch Simulation von CT-Bildern oder durch Zugriff auf eine Datenbank, in der zuvor aufgenommene (oder simulierte) Projektionsbilder abgespeichert worden sind. Mit dem Begriff "Projektionsbilder" sind wohlgemerkt keine bereits rekonstruierten Bilder gemeint, sondern Bilder, die durch Projektion eines Röntgenstrahls durch ein untersuchtes Objekt hindurch auf einem Detektor entstanden sind. Dies sind bevorzugt Rohdaten eines CT-Scans, können aber durchaus auch vorverarbeitete Daten sein, bei denen z.B. eine Rauschunterdrückung stattgefunden hat.

Die Projektionsbilder werden häufig mit einem kegelförmigen Strahl bei einer Bewegung von Röntgenquelle und Detektor auf einer kreisförmigen oder spiralförmigen Trajektorie aufgenommen. Dies ist jedoch im Grunde für die Erfindung unerheblich.

Aus den Projektionsbildern werden mittels Re-Binning Zwischenbilder erstellt. Die Zwischenbilder sind ebenfalls Projektionsbilder, es wird jedoch zur besseren Unterscheidung der Begriff "Zwischenbilder" verwendet, um anzudeuten, dass diese Bilder lediglich als Zwischenstufe zur Rekonstruktion verwendet werden. Es sollte beachtet werden, dass dieser Schritt auch vor einem Herunterladen der Projektionsbilder aus einer Datenbank erfolgen kann. Es kann also durchaus eine Aufnahme erfolgen, ein Re-Binning der Projektionsbilder stattfinden und die dadurch entstehenden Zwischenbilder in einer Datenbank zwischengespeichert werden.

Bei dem Re-Binning der Projektionsbilder werden die Spalten der Projektionsbilder unterschiedlichen Zwischenbildern zugewiesen. Im Folgenden werden die Koordinaten der Spalten mit "p" angegeben und die Koordinaten der Zeilen mit "q". Bei einem kegelförmigen Röntgenstrahl wird ein Projektionsbild mit einem Strahlkegel aufgenommen. Die einzelnen Pixel (entsprechen im Grunde Bins) auf einem Detektor erhalten somit Intensitätsinformationen von Strahlen der Röntgenquelle, wobei unterschiedliche Detektorpixel aufgrund der Kegelform des Röntgenstrahls Strahlen aus unterschiedlichen Winkeln detektieren. Einige häufig verwendete Rekonstruktionsverfahren benötigen jedoch eine parallele Strahlgeometrie. Andere Projektionsverfahren können andere Strahlgeometrien benötigen.

Zur Umwandlung in parallel "aufgenommene" Zwischenbilder werden von einer Vielzahl von Projektionsbildern (die in unterschiedlichen Positionen der Messapparatur aufgenommen wurden) diejenigen Strahlen ausgewählt, die bei den Aufnahmen jeweils parallel zu Strahlen anderer Projektionsbilder waren. Da sich Detektor und Röntgenquelle bei der Aufnahme mitdrehen, die Aufnahmepositionen (im Raum) jedoch bekannt sind, kann für jeden Strahl aus dessen Aufnahmeposition und der jeweiligen Bildposition dessen Winkel im Raum berechnet werden. Bei der Parallelprojektion wären die Bins dabei nicht die einzelnen Pixel, sondern die einzelnen Spalten der Projektionsbilder. Beispielsweise könnte in einem einfachen Beispiel das erste Zwischenbild aus den Werten der Zeilen p = 1 von dem ersten Projektionsbild, p = 2 von dem zweiten Projektionsbild usw. gebildet werden. Für das zweite Zwischenbild wären dies dann z.B. p = 2 von dem ersten Projektionsbild, p = 3 von dem zweiten Projektionsbild und so weiter. Auf diese Weise erhält man Parallel-Projektionsbilder, bei denen die Spalten-Bildposition (p-Koordinate) gleichzeitig einem Zeitverlauf entspricht, da die Zeilen von unterschiedlichen Aufnahmen zu unterschiedlichen Aufnahmezeitpunkten stammen und damit auch einem bestimmten Bewegungszustand entsprechen.

Optional kann nach dem Re-Binning eine Filterung der Zwischenbilder erfolgen. Beispielweise kann eine Faltung erfolgen. Während eines bevorzugten Faltungsschritts werden die Projektionsbilder für ein besseres Rekonstruktionsergebnis gefiltert. Statt (oder zusätzlich zu) einer Faltung kann aber auch eine Multiplikation im Fourier Raum durchgeführt werden.

Dabei werden die Zwischenbilder einer Fouriertransformation unterzogen und mit einem angepassten Filter im Fourier-Raum multipliziert. Dies kann effizienter als eine Faltung der Zwischenbilder sein. Eine solche Filterung ist im Grunde Stand der Technik.

Nun erfolgt die Berechnung von Schichtbildern mittels einer Rückprojektion der Zwischenbilder. Dies ist an sich im Stand der Technik bekannt (s. z.B. oben genannte Schrift von Schäfer et al. oder die weiter unten erwähnte Schrift von Stierstorfer et al.). Es werden jedoch im Zuge dieser Berechnung zusätzlich besondere Schritte zur Bewegungskompensation durchgeführt, welche das Re-Binning berücksichtigen. Bei der Berechnung werden Voxel (dreidimensionaler Bildpunkt bzw. Volumenpixel) betrachtet, die dem Bereich entsprechen, an dem das Objekt untersucht worden ist bzw. einem Bildpunkt der zu rekonstruierenden Schichtbilder. Werte der Voxel geben damit letztendlich die Bildpunkte der rekonstruierten Schichtbilder wieder, wobei jedes Pixel eines Schichtbilds einem Voxel einer Schicht des aufgenommenen Volumens entspricht.

Bei der (an sich bekannten) Rückprojektion werden die Zwischenbilder zur Berechnung der eigentlichen Schichtbilder verwendet. Das Ziel des Rückprojektionsschritts ist die Rekonstruktion des Voxelvolumens, das den Patienten oder das gescannte Objekt repräsentiert, und das aus den genannten Voxeln gebildet wird. Dies wird durchgeführt, indem jedes Voxel für jedes Zwischenbild (nach dem Re-Binning und ggf. der Filterung) für sich betrachtet wird. Für jedes Voxel wird ein Strahl berechnet, der durch das Voxel und die entsprechende Position im Zwischenbild geht. Die Informationen der entsprechenden Position im Zwischenbild werden dann für die Rückprojektion verwendet. Sobald dies für alle Voxel im Volumen erfolgt ist, wird der Vorgang für das nächste Zwischenbild wiederholt, bis alle Zwischenbilder berücksichtigt wurden. Welcher Wert nun genau aus dem Zwischenbild für die Rückprojektion verwendet wird, wird durch die Erfindung vorgegeben.

Jedes Voxel hat eine Voxelposition, welche eine dreidimensionale Koordinate oder ein dreidimensionaler Vektor sein kann. Im Folgenden wird von einer Koordinate gesprochen, wobei ein Vektor damit umfasst ist. Wie vorangehend gesagt wurde, repräsentieren die Voxel Volumenelemente des aufgenommenen Objekts und liegen somit in einem virtuellen Raum, der dem Aufnahmebereich entspricht. Die Voxelposition ist also eine Position in diesem virtuellen Raum.

Für eine Bewegungskompensation im Zuge der Berechnung wird ein bekanntes Bewegungsprofil vorausgesetzt. Dieses betrifft den Aufnahmebereich (denjenigen Bereich, an dem sich das Objekt während der Aufnahme befunden hat) und damit die Bewegung der Voxel. Da die Voxel durch ihre jeweiligen Voxelpositionen definiert sind, betrifft das Bewegungsprofil die Veränderung der jeweiligen Voxelpositionen der Voxel. Dazu umfasst das Bewegungsprofil Bewegungsdaten zu den einzelnen Voxeln, bzw. ist das Bewegungsprofil eine Sammlung von Bewegungsdaten für die einzelnen Voxel.

Wie ein Bewegungsprofil erstellt wird, ist Stand der Technik. Beispielsweise kann ein Patient während einer Aufnahme von einer Kamera gefilmt werden und das Bewegungsprofil aus den Kameraaufnahmen abgeleitet werden. Es existieren aber auch Bewegungsschätzungsverfahren für CT-Scans wie z.B. in der eingangs erwähnten Arbeit von Bruder et al. ("Compensation of skull motion and breathing motion in CT using data-based and image-based metrics, respectively") genauer ausgeführt wird.

Die Bewegung kann mit Sensoren gemessen werden, z.B. mit Bewegungssensoren, die am Scanner angebracht sind, um die Bewegung des Scanners zu messen, oder 3D-Kameras, um die Bewegung des Patienten zu messen.

Einfach erklärt ist das Bewegungsprofil so beschaffen, dass es (mit seinen Bewegungsdaten) die Bewegung jedes einzelnen Voxels über die Aufnahmezeit wiedergibt oder zumindest interpolieren lässt. Da dies in der Praxis in der Regel einen sehr großen Speicherbedarf erfordert (bei 512 Voxeln je Bildachse, 30 Aufnahmen und zwei Byte pro Voxelkoordinate wäre das Bewegungsprofil ca. 25 GB groß), kann das Bewegungsprofil auch auf Näherungen, Unterabtastungen und/oder Interpolationen basieren und/oder vordefinierte Bereiche ohne Bewegung enthalten. Beispielsweise genügt es, wenn bezüglich eines Herzens die Bewegung einiger Punkte der Wandungen bekannt ist und die Bewegung der Voxel im Volumen des Herzens basierend auf diesen Punkten berechnet wird, wobei hier auch nur diejenigen Voxel berücksichtigt werden müssen, die im Bewegungsbereich der Wandungen liegen. Wie im Folgenden noch genauer ausgeführt wird, kann das Bewegungsprofil von Näherungswerten oder Modellen für die Bewegungen ausgehen. Beispielsweise kann von einer rigiden Bewegung ausgegangen werden, wozu lediglich für eine Vielzahl von Zeitpunkten (ggf. jeden relevanten Zeitpunkt) nur Bewegungsdaten für die Translation, Rotation und Verschiebung des Rotationszentrums für das gesamte gescannte Objekt notwendig sind. In diesem Fall bewegt sich also das gesamte Volumen gleich und es wird nur einen Satz Bewegungsparameter für das gesamte Volumen anstatt für jeden einzelne Voxel benötigt. Dieser Ansatz benötigt somit sehr wenig Speicherplatz.

Mit dem Bewegungsprofil werden nun für jedes Zwischenbild und für jedes Voxel (mit einer vorbekannten initialen Voxelposition x) die weiteren Rekonstruktionsschritte durchgeführt. Ziel ist es dabei, den Voxeln (hier sind die Voxel auf dem Weg eines Strahls gemeint, was zur Rückprojektion benötigt wird) die jeweils korrekten Bildinformationen zuzuweisen. Zwar ist wie gesagt die Rekonstruktion von Schichtbildern aus den Zwischenbildern bekannt, jedoch liegen die Abbildungen der Voxel durch deren Bewegung oftmals nicht dort in den Zwischenbildern, wo sie (ohne Bewegung) sein sollten. Es werden dadurch im Stand der Technik ohne eine Bewegungskompensation den Voxeln zuweilen Bildinhalte zugewiesen, die eigentlich nicht der Abbildung dieser Voxel entsprechen. Dies führt zu Artefakten in den Schichtbildern und ist unerwünscht. Mit den nachfolgenden, besonderen Schritten zur Bewegungskompensation wird im Grunde ermittelt, wo in den Zwischenbildern die Bildinformation eines Voxels zu finden sein dürfte, und genau diese Bildinformation für das Voxel verwendet.

Zum besseren Verständnis der nachfolgenden Ausführungen sollte beachtet werden, dass eine Bewegung eines Voxels im Grunde nur eine Veränderung dessen Voxelposition während der Aufnahmezeit ist. Innerhalb dieser Aufnahmezeit werden mehrere Projektionsbilder zu unterschiedlichen Aufnahmezeitpunkten aufgenommen, so dass jedes Projektionsbild das Voxel an dessen jeweils aktueller Voxelpositionen zeigt. Jedes Zwischenbild zeigt dabei in seinen Spalten auch gleichzeitig einen Zeitverlauf, da die Zeilen von unterschiedlichen Projektionsbildern stammen. Somit entspricht die Spalten-Bildposition (p-Koordinate) im Grunde einer Zeitkoordinate und jede p-Koordinate entspricht damit auch einem anderen Bewegungszustand der Voxel.

Da für jede P-Koordinate eines Zwischenbildes der genaue Aufnahmezeitpunkt bekannt ist (es ist ja bekannt, aus welchem Projektionsbild die Bildinformation an dieser P-Koordinate stammt und wann dieses Projektionsbild aufgenommen wurde), ist auch der Bewegungszustand dort bekannt. Mit dem Bewegungszustand (bzw. dem Aufnahmezeitpunkt) kann aus dem Bewegungsprofil die jeweils aktuelle Voxelposition berechnet werden. Im Grunde sind die Größen "Bewegungszustand" und "Aufnahmezeitpunkt" für die Voxelpositionen gleichbedeutend, da zu einem bestimmten Aufnahmezeitpunkt ein bestimmter Bewegungszustand herrschte. Es wird im Folgenden für ein einfacheres Verständnis davon ausgegangen, dass aus dem Bewegungsprofil die Voxelpositionen direkt mit einem bekannten Bewegungszustand bestimmt werden können, wobei gleiches natürlich auch für einen bekannten Aufnahmezeitpunkt gelten kann. Es sollte hierzu beachtet werden, dass die Spalten-Bildkoordinate p unterschiedlicher Zwischenbilder nicht unbedingt mit dem Bewegungszustand identisch sein muss, da z.B. das Zentrum der Zwischenbilder gleichen p-Koordinaten entspricht, aber in der Regel unterschiedlichen Bewegungszuständen. Da jedoch, wie gesagt, bekannt ist, aus welchen Projektionsbildern die Bildinhalte der Zwischenbilder stammen, kann der jeweilige Bewegungszustand aus jeder p-Koordinate jedes Zwischenbildes abgeleitet werden und kann somit als "globaler Parameter" für die p-Koordinaten verwendet werden.

Kurz gesagt: Das Bewegungsprofil umfasst Bewegungsdaten für unterschiedliche Bewegungszustände. Für einen bekannten Bewegungszustand können die gewünschten Bewegungsdaten aus dem Bewegungsprofil ausgewählt und für eine Berechnung einer Voxelposition nach den Schritten b) oder e) verwendet werden. Die Bewegungsdaten können auch als Funktionen des Bewegungszustands vorliegen. Für den einfachen Fall einer einfachen Translation $z(t)$ mit der Translationsfunktion z und dem Bewegungszustand t könnte eine geänderte Voxelposition x' für einen bekannten Bewegungszustand T einfach aus x' = $z(T)$ berechnet werden.

Zur Bewegungskompensation erfolgt zuerst eine Auswahl eines Initial-Bewegungszustands basierend auf dem Zwischenbild, wobei bevorzugt für verschiedene Zwischenbilder unterschiedliche Initial-Bewegungszustände ausgewählt werden. Dieser Initial-Bewegungszustand kann im Grunde willkürlich gewählt werden, liegt aber bevorzugt im Zentrum eines jeweils betrachteten Zwischenbildes. Wenn jeweils die Zentren der Zwischenbilder betrachtet werden, sind einfache und standardisierte Berechnungen möglich. Zwar wird damit jedes Zwischenbild zu einem anderen Bewegungszustand betrachtet (Der Aufnahmezeitpunkt der zentralen Spalten-Bildposition ist für jedes Zwischenbild in der Regel unterschiedlich), dies hat jedoch keine nachteilhaften Auswirkungen auf das Ergebnis, da zum Schluss alles auf die (unbewegten) ursprünglichen Voxelvolumina zurückgeführt wird.

Zu dem Begriff "Zentrum" sollte jedoch beachtet werden, dass es mehrere Bezugssysteme geben kann, welche ein "Zentrum" im Zwischenbild definieren können. Dies wäre zum einen die Bildmitte. Diese läge bei der Hälfte der Spalten. Nun ist es jedoch so, dass der Detektor nicht immer zwingend symmetrisch aufgebaut sein muss. Wird das Zentrum über das Rotationszentrum der Gantry definiert, so ist es möglich, dass sich der Detektor bei einer Aufnahme links von diesem Zentrum länger aufhält als rechts von diesem Zentrum. Dies spiegelt sich dann entsprechend in den p-Koordinaten der Zwischenbilder wieder. In diesem Fall liegt das Zentrum nicht zwingend in der Bildmitte des Zwischenbildes, sondern kann etwas nach links oder rechts verschoben sein.

Es kann aber auch besonders bevorzugt von den jeweiligen Bildmitten (Hälfte der Spalten) der Projektionsbilder ausgegangen werden. Diese können als Zentren der Zwischenbilder angesehen werden, also die Spalte im Zwischenbild, in der eine Bildmitte eines Projektionsbildes vorhanden ist. An dieser besonderen Stelle ist der Rotationswinkel der Gantry in der Kegelstrahlgeometrie identisch mit dem virtuellen Rotationswinkel der Parallelstrahlgeometrie und somit sind an dieser Stelle die Bewegungszustände aus Projektionsbild und dem entsprechenden Zwischenbild identisch. Wie vorangehend gesagt muss diese Bildmitte des Projektionsbildes nicht unbedingt auch in der Bildmitte des Zwischenbildes liegen. Der Einfachheit halber und für ein einfacheres Verständnis der Erfindung kann man sich aber für die folgenden Ausführungen das Zentrum in der Bildmitte des Projektionsbildes vorstellen.

Bei der Berechnung einer Referenz-Voxelposition (Voxelposition zu dem Initial-Bewegungszustand) aus dem Bewegungsprofil wird nun diese zu dem ausgewählten Initial-Bewegungszustand berechnet. Wie oben gesagt wurde, ist das Bewegungsprofil entsprechend ausgestaltet.

Beispielsweise kann in einer einfachen aber speicherintensiven Ausführungsform einfach in einer Lookup-Tabelle zu dem betreffenden Bewegungszustand (Aufnahmezeitpunkt) ermittelt werden, wie genau die Position des Voxels gewesen sein musste. Die Voxelposition kann aber auch aus einer Funktion über die Bewegungszustände mit Berechnung der Funktion für den betreffenden Bewegungszustand berechnet werden.

Beispielsweise kann das Bewegungsprofil vorgeben, dass eine Translation z und eine Drehung R (R ist z.B. eine Matrix) um einen Drehpunkt c stattfindet. Der Bewegungszustand (hier mit "t" angegeben, um die Nähe zu einem Aufnahmezeitpunkt darzustellen) kann also als Datensatz von Funktionen $z(t)$, $c(t)$ und $R_T$ vorliegen. Eine Voxelposition $x_M$ zum Initial Bewegungszustand T ließe sich dann aus der ursprünglichen Voxelposition x aus der Formel $x_M = R_T(x-c(T)) +c(T)+z(T)$ berechnen. Wohlgemerkt wird hier angenommen, dass sich das zu rekonstruierende Voxel so bewegt, wie sich Patient oder gescanntes Objekt während der Aufnahme bewegten (ggf. auch durch Fehler des Bewegungsablaufs des Scanners).

Für ein Voxel an einer Voxelposition x wird dessen Referenz-Voxelposition $x_M$ also für den Initial-Bewegungszustand berechnet. Im folgenden Schritt wird berechnet, wo das Voxel (welches an der Referenz-Voxelposition liegt) im Zwischenbild zu sehen wäre.

Es wird diesbezüglich zumindest die Spalten-Bildposition p, oder die zweidimensionale Bildposition (p, q), berechnet, an der das Voxel an der Referenz-Voxelposition $x_M$ im Zwischenbild abgebildet würde. Die Position in q-Richtung ist dabei unproblematisch und hat auch nur eine untergeordnete Relevanz für das grundsätzliche Verfahren. Da der Strahlengang bekannt ist (dieser war ja Grundlage zum Re-Binning) kann auf einfache Weise bestimmt werden, wo ein Strahl mit einer vorbekannten Richtung durch dieses Voxel auf das Zwischenbild getroffen wäre. Bei einer Parallelstrahl-Geometrie müsste z.B. einfach die Projektion des Voxels auf das Zwischenbild betrachtet werden.

Hierzu ist jedoch zu beachten, dass jede Spalten-Bildposition p in einem Zwischenbild einem bestimmten Aufnahmezeitpunkt und damit einem bestimmten, "geänderten Bewegungszustand" entspricht, der nicht mehr dem Initial-Bewegungszustand entsprechen muss (und es in der Regel auch nicht tut). Zu diesem geänderten Bewegungszustand (an der ermittelten Spalten-Bildposition p) könnte sich das Voxel aufgrund seiner Bewegung an einer anderen Voxelposition befunden haben.

Kurz: Wenn ein Voxel nicht direkt im Zentrum eines Zwischenbildes abgebildet wird, herrschte gleichzeitig ein anderer Bewegungszustand als der Initial-Bewegungszustand und das Voxel könnte sich zu diesem "Zeitpunkt" woanders befunden haben.

Es wird daher nun der geänderte Bewegungszustand des Voxels basierend auf der berechneten Spalten-Bildposition p ermittelt. Der geänderte Bewegungszustand könnte direkt aus der Spalten-Bildposition berechnet werden.

Entsprechend der oben beschriebenen Berechnung der Spalten-Bildposition p wird nun die geänderte Spalten-Bildposition p' berechnet. Zusätzlich wird hier jedoch noch die geänderte Zeilen-Bildposition q' berechnet, so dass die zweidimensionale Koordinate (p', q') vorliegt. Die Berechnung der geänderten Zeilen-Bildposition q' kann wieder einfach dadurch erfolgen, dass berechnet wird, wo ein (bekannter) Strahl durch das Voxel an der geänderten Voxelposition x' mit einem vorgegebenen Winkel auf das Zwischenbild treffen würde. Hierzu ist jedoch zu beachten, dass wenn bei der Aufnahme eine konische Strahlgeometrie vorgelegen hatte, selbst bei einem parallelen Re-Binning die konische Form in q-Richtung erhalten bleibt.

Zuletzt wird im Zwischenbild der Bildwert an der geänderten Bildposition (p', q') genommen und als Wert für die Rückprojektion verwendet (und dazu ggf. dem Voxel oder einer Gruppe von Voxeln zugewiesen).

Dies erfolgt für alle Voxel für ein Zwischenbild, und dann erneut für jedes Voxel für ein anderes Zwischenbild bis alle relevanten Zwischenbilder abgearbeitet wurden.

Im Grunde kann der Vorgang so zusammengefasst werden, dass nicht mit der erstbesten Voxelposition gearbeitet wird, sondern erst ein Iterationsschritt durchgeführt wird. Zwar mag erscheinen, dass dieses Verfahren nicht genau arbeitet, weil sich das Voxel zum "Zeitpunkt" der geänderten Spalten-Bildposition p' wieder woanders befunden haben könnte, jedoch zeigt es sich, dass bereits mit einem einzigen Iterationsschritt die Bildqualität bedeutend verbessert werden kann. Selbstverständlich sind aber weitere Iterationsschritte möglich, wie im Folgenden noch thematisiert wird, wobei natürlich für jeden Iterationsschritt zusätzlicher Rechenaufwand erforderlich ist.

Die vorliegende Erfindung integriert also eine Bewegungskompensation in die Rückprojektion und ist besonders vorteilhaft für einen gewichteten und gefilterten Rückprojektions-Algorithmus (WFBP-Algorithmus) wie er z.B. von K. Stierstorfer et al. vorgestellt wird ("Weighted FBP - a simple approximate 3D FBP algorithm for multislice spiral CT with good dose usage for arbitrary pitch". Physics in Medicine & Biology, 49(11), 2209; 2004) und der für CT-Rekonstruktionen vorteilhaft verwendet werden kann. Das beschriebene Bewegungskompensationsverfahren ist jedoch im Grunde für jedes CT-Rekonstruktionsverfahren vorteilhaft, das Rebinning- und Rückprojektionsschritte verwendet.

Ein erfindungsgemäßes System zur Bewegungskompensation bei der CT-Rekonstruktion umfasst Mittel zur Durchführung des erfindungsgemäßen Verfahrens. Das System umfasst bevorzugt die folgenden Komponenten:

- eine Datenschnittstelle ausgelegt zum Empfang von Projektionsbildern eines CT-Scans,
- eine Re-Binning-Einheit ausgelegt zum Erstellen von Zwischenbildern, wobei die Zwischenbilder aus einem Re-Binning der Spalten der Projektionsbilder erstellt werden,
- eine Rekonstruktionseinheit ausgelegt zum Berechnen von Schichtbildern mittels einer Rückprojektion der Zwischenbilder auf vorbestimmte Voxel der Schichtbilder.

Die Rekonstruktionseinheit umfasst (neben den im Stand der Technik zur Rekonstruktion bekannten Elementen) die zusätzlichen Komponenten:

- ein Bewegungsmodul ausgelegt zur Auswahl eines Initial-Bewegungszustands für ein Zwischenbild oder zur Ermittlung eines geänderten Bewegungszustandes für ein Voxel basierend auf dessen berechneter Spalten-Bildposition in einem Zwischenbild,
- ein Positionierungsmodul ausgelegt für eine Berechnung einer Voxelposition des Voxels aus dessen ursprünglicher Voxelposition und dem Bewegungsprofil zu einem ausgewählten oder berechneten Bewegungszustand,
- ein Abbildungsmodul ausgelegt für eine Berechnung einer Spalten-Bildposition und einer Zeilen-Bildposition, an der ein Voxel in einem Zwischenbild abgebildet würde,
- ein Übernahmemodul ausgelegt zur Übernahme eines Bildwerts des Zwischenbildes an der geänderten Bildposition zur Verwendung für die Rückprojektion.

Die Datenschnittstelle ist im Stand der Technik bekannt. Sie kann z.B. eine Netzwerkdatenschnittstelle sein und z.B. dazu ausgelegt sein über ein PACS (Picture Archiving and Communication System = Bildarchivierungs- und Kommunikationssystem) Bilder zu empfangen. Die Datenschnittstelle kann aber auch ein Datenbus eines CT-Systems sein, über den aufgenommene Projektionsbilder eines CT-Scans geleitet werden.

Die Re-Binning-Einheit dient zur oben näher ausgeführten Erstellen der Zwischenbildern mittels Re-Binning, z.B. Bildern mit paralleler Strahlführung.

Eine Rekonstruktionseinheit ist im Grunde im Stand der Technik bekannt und dient dem Berechnen der Schichtbilder. Die hier verwendete Rekonstruktionseinheit umfasst die Elemente einer herkömmlichen Rekonstruktionseinheit und zusätzlich noch die oben aufgeführten weiteren Module, die im Folgenden genauer beschrieben werden.

Das Bewegungsmodul zeichnet sich dadurch aus, dass es einen Bewegungszustand vorgibt. Ein Bewegungszustand kann mittels zweier Modi bestimmt werden, wozu das Bewegungsmodul dazu durchaus zwei Sub-Module aufweisen kann (aber nicht unbedingt muss).

Der erste Modus ist das Auswählen eines Bewegungszustands. Dies geschieht aufgrund einer Vorgabe durch einen Benutzer, einer Voreinstellung oder durch das aktuell verwendete Zwischenbild. Beispielsweise kann die Auswahl so erfolgen, dass ein Bewegungszustand ausgewählt wird, der einer bestimmten Spalten-Position p eines Zwischenbildes (z.B. dessen Zentrum) entspricht. Es kann aber auch ein Bewegungszustand ausgewählt werden, der mit einem bestimmten Aufnahmezeitpunkt verknüpft ist. Das entsprechende Sub-Modul könnte als "Bewegungs-Auswahlmodul" bezeichnet werden.

Der zweite Modus ist die Ermittlung eines Bewegungszustandes eines Voxels basierend auf einer berechneten Spalten-Bildposition p. Hierzu wird einfach eine Angabe der Spalten-Position benötigt und ein Bewegungszustand ausgewählt, der mit dieser Spalten-Position (des betreffenden Zwischenbildes) verknüpft ist. Das entsprechende Sub-Modul könnte als "Bewegungs-Positionsmodul" bezeichnet werden.

Im Grunde kann ein einfaches Bewegungsmodul eine Zuordnungstabelle oder Zuordnungsfunktion aufweisen, mittels der einer Bild-Koordinate jedes Zwischenbildes ein entsprechender Bewegungszustand zugeordnet werden kann.

Das Positionierungsmodul hat Kontakt zu dem Bewegungsprofil, z.B. mittels einer Kommunikation mit einer Datenbank oder einem Speicherbereich. In dem Bewegungsprofil liegen Informationen zu Bewegungen von Voxeln vor, z.B. in Form von Funktionen oder Tabellen, und das Positionierungsmodul ist dazu ausgelegt, diese Informationen abzurufen und insbesondere auch in einen vorgegebenen Speicherbereich zu schreiben.

Die Berechnung einer Voxelposition kann wie vorangehend beschrieben erfolgen. Das Positionierungsmodul kann dabei sowohl die Referenz-Voxelposition als auch die geänderte Voxelposition berechnen, da das Prinzip der Berechnung dasselbe ist. Es kann aber auch zwei Sub-Module zur getrennten Berechnung dieser Größen aufweisen.

Das Abbildungsmodul berechnet die Bildpositionen wie oben bereits genauer ausgeführt wurde. Bezüglich der Referenz-Voxelposition ist es nur notwendig die Spalten-Bildposition des Voxels im Zwischenbild zu berechnen, es kann aber auch zusätzlich dessen Zeilen-Bildposition berechnet werden. Für die geänderte Voxelposition müssen sowohl die Spalten-Bildposition des Voxels im Zwischenbild als auch dessen Zeilen-Bildposition berechnet werden, damit später die passende Bildinformation dem Voxel zugeordnet werden kann.

Das Abbildungsmodul kann durchaus zwei Sub-Module zur getrennten Berechnung der Größen aufweisen.

Das Übernahmemodul kann die Übernahme des Bildwerts des Zwischenbildes einfach dadurch erreichen, dass es die Bildinformationen an vorher berechneten Bildkoordinaten kopiert und in einen Datensatz für die Rückprojektion hineinschreibt.

Diese Module können in einer Steuereinrichtung des CT-Systems enthalten sein. Eine erfindungsgemäße Steuereinrichtung zur Steuerung eines Computertomographiesystems ist für die Durchführung eines erfindungsgemäßen Verfahrens ausgelegt und/oder umfasst ein erfindungsgemäßes System.

Das erfindungsgemäße Computertomographiesystem (CT-System) umfasst eine erfindungsgemäße Steuereinrichtung bzw. ein erfindungsgemäßes System und ist zur Durchführung eines erfindungsgemäßen Verfahrens ausgelegt. CT-Systeme an sich sind im Stand der Technik bekannt.

Ein Großteil der zuvor genannten Komponenten des Systems bzw. der Steuereinrichtung, können ganz oder teilweise in Form von Softwaremodulen in einem Prozessor eines entsprechenden Rechensystems realisiert werden. Eine weitgehend softwaremäßige Realisierung hat den Vorteil, dass auch schon bisher verwendete Steuereinrichtungen auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem bzw. eine Speichereinrichtung einer Steuereinrichtung eines Computertomographiesystems ladbar ist, mit Programmabschnitten, um alle Schritte des erfindungsgemäßen Verfahrens auszuführen, wenn das Programm in dem Rechensystem bzw. der Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Zum Transport zum Rechensystem bzw. zur Steuereinrichtung und/oder zur Speicherung an oder in dem Rechensystem bzw. der Steuereinrichtung kann ein computerlesbares Medium, z.B. ein Memorystick, eine Festplatte oder ein sonstiger transportabler oder fest eingebauter Datenträger dienen, auf welchem die von einem Rechensystem bzw. einer Rechnereinheit der Steuereinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Bei einem bevorzugten Verfahren entspricht der Initial-Bewegungszustand einer Spalten-Bildposition p, die im Wesentlichen im Zentrum des Zwischenbildes liegt. Damit ist gemeint, dass die Spalten-Bildposition P nicht weiter als 5 % der Gesamtspalten des Zwischenbildes vom Zentrum entfernt liegt, bevorzugt nicht weiter als 1 % der Gesamtspalten.

Ein besonders bevorzugter Initial-Bewegungszustand entspricht einer Spalten-Bildposition p, die derjenigen Spalte im Zwischenbild entspricht, die in einem der Projektionsbilder genau in der Bildmitte lag.

Bevorzugt wird dabei ein solcher Initial-Bewegungszustand für jedes Zwischenbild ausgewählt, also besonders bevorzugt für jedes Zwischenbild ein Initial-Bewegungszustand entsprechend einer Spalten-Bildposition, die genau im Zentrum des jeweiligen Zwischenbildes liegt.

Gemäß einem bevorzugten Verfahren wird zusätzlich zu einer Spalten-Bildposition, an der das Voxel im Zwischenbild abgebildet würde, eine Zeilen-Bildposition berechnet, an der das Voxel im Zwischenbild abgebildet würde.

Was das Bewegungsprofil und die Berechnung der Voxelposition betrifft, ist in der Praxis zu beachten, dass auf Hardwareseite bei der Bildrekonstruktion oftmals zwei Arbeitsspeicher vorliegen. Ein kleinerer, schnellerer Arbeitsspeicher und ein größerer, langsamerer. Die Berechnungen werden in der Regel in dem schnellen Arbeitsspeicher durchgeführt. Es ist nun von Vorteil, Daten, die zur Berechnung benötigt werden, in den schnellen Arbeitsspeicher zu schreiben, damit die Berechnungen nicht durch Zugriffszeiten auf den langsamen Arbeitsspeicher unnötig verlangsamt werden. Da, wie oben gesagt, das Bewegungsprofil recht groß sein kann, wird es in der Regel im langsamen Arbeitsspeicher (oder einem Festspeicher) vorhanden sein. Es könnte also von Vorteil sein, für jedes Zwischenbild eine gewisse Anzahl von Bewegungsdaten aus dem Bewegungsprofil in den schnellen Arbeitsspeicher zu laden und Bewegungen, die zeitlich zwischen diesen Bewegungszuständen liegen aus den heruntergeladenen Bewegungsdaten zu interpolieren. Dies kann Rechenzeit sparen. Versuche haben ergeben, dass neben dem initialen Bewegungszustand zwei weitere Bewegungszustände für eine effektive Bewegungskompensation bereits ausreichen.

Gemäß einem bevorzugten Verfahren werden bei der Rückprojektion der Zwischenbilder für eine Anzahl der Zwischenbilder, insbesondere für jedes Zwischenbild aus dem Bewegungsprofil für den Initial-Bewegungszustand und zumindest für einen früheren und zumindest einen späteren Bewegungszustand Bewegungsdaten (zu Voxelbewegungen) aus dem Bewegungsprofil vorausgewählt. Es liegen also z.B. Bewegungsdaten für einen Initial-Bewegungszustand für eine p-Koordinate im Zentrum des Zwischenbildes vor und jeweils Bewegungsdaten für einen Bewegungszustand für eine p-Koordinate links und rechts vom Zentrum.

Die geänderte Voxelposition x' des Voxels wird in diesem Fall bevorzugt basierend auf diesen vorausgewählten Bewegungsdaten und dem ermittelten geänderten Bewegungszustand berechnet, indem für diesen geänderten Bewegungszustand "passende" Bewegungsdaten interpoliert werden. Dazu werden bevorzugt die Bewegungsdaten der nächstliegenden Bewegungszustände verwendet.

Die Interpolation basiert also bevorzugt auf denjenigen Bewegungszuständen, die dem geänderten Bewegungszustand am nächsten liegen. Dies bedeutet, dass der Abstand der jeweiligen nächsten vorausgewählten Bewegungszustände von der Spalten-Bildposition p der Referenz-Voxelposition $x_M$ ermittelt wird, und die (vorausgewählten) Bewegungsdaten des Bewegungsprofils der benachbarten Bewegungszustände zur Berechnung der geänderten Voxelposition x' verwendet werden. Der Abstand der Bildpositionen der Bewegungszustände geht dabei bevorzugt in Form einer Wichtung ein. Je näher die Spalten-Bildposition p der Referenz-Voxelposition $x_M$ zu einem benachbarten Bewegungszustand ist, desto stärker gehen dessen Bewegungsdaten in die Rechnung der Voxelposition ein.

Kurz gesagt: Es werden einige Bewegungszustände (z.B. drei) ausgewählt, die Bewegungsdaten zu diesen Bewegungszuständen aus dem Bewegungsprofil ermittelt und für einen neuen Bewegungszustand zwischen den ausgewählten Bewegungszuständen die betreffenden Bewegungsdaten aus denjenigen Bewegungsdaten der benachbarten Bewegungszustände interpoliert. Mit diesen interpolierten Bewegungsdaten wird dann die Voxelposition berechnet.

Bei drei Bewegungszuständen mit dem initial-Bewegungszustand im Zentrum (p0) und zwei Bewegungszuständen bei den beiden weiteren P-Koordinaten pmin und pmax würde also bei einer errechneten Spalten-Bildposition p ermittelt, welche P-Koordinaten am nächsten liegen (z.B. pmin und p0), der Abstand von p zu diesen ermittelt (z.B. A1 zu pmin und A2 zu p0) und dann eine gewichtete Berechnung der Bewegung mit den Wichtungsfaktoren a1 und a2 durchgeführt (z.B. a1=A1/(A1+A2) und a2=A2/(A1+A2)). Eine bevorzugte Vorgehensweise für den "neuen" Bewegungszustand T2 und den beiden benachbarten bekannten Bewegungszuständen T und T1 und den Bewegungsdaten $R_T$, $R_{T1}$, $c(T)$, $c(T1)$, $z(T)$ und $z(T1)$ für diese beiden bekannten Bewegungszustände wäre:

- Interpolieren einer Drehung $R_{T2}$ aus $R_T$ und $R_{T1}$.
- Interpolieren eines Drehpunkts $c(T2)$ aus $c(T)$ und $c(T1)$, z.B. $c(T2) = a1 \cdot c(T1) + a2 \cdot c(T)$.
- Interpolieren einer Translation $z(T2)$ aus $z(T)$ und $z(T1)$, z.B. $z(T2) = a1 \cdot z(T1) + a2 \cdot z(T)$.
- Berechnen der geänderten Voxelposition mit der Formel:

$$x' = R_{T2}(x - c(T2)) + c(T2) + z(T2)$$

Es ist zu beachten, dass bei einem Zentrum, welches nicht der Bildmitte des Zwischenbilds entspricht, die äußeren Bereiche Pmin (immer negativ) und Pmax (immer positiv) auch nicht unbedingt symmetrisch um p=0 verteilt sein müssen und pmin ≠ -pmax gelten kann.

Gemäß einem bevorzugten Verfahren werden vor dem Verwenden des Bildwerts für die Rückprojektion die folgenden Schritte mindestens einmal durchlaufen:

- Berechnung einer geänderten Spalten-Bildposition p', an der das Voxel an der geänderten Voxelposition x' im Zwischenbild abgebildet würde,
- Ermittlung eines geänderten Bewegungszustandes des Voxels basierend auf der geänderten Spalten-Bildposition p',
- Berechnung einer geänderten Voxelposition x' des Voxels aus dessen ursprünglicher Voxelposition x und dem Bewegungsprofil zu dem geänderten Bewegungszustand.

Es wird also iterativ mindestens eine jeweils neue geänderte Voxelposition berechnet. Damit wird dem Umstand Rechnung getragen, dass jede p-Koordinate in einem Zwischenbild gleichzeitig einem individuellen Aufnahmezeitpunkt und damit einem individuellen Bewegungszustand entspricht.

Gemäß einem bevorzugten Verfahren erfolgt beim Erstellen der Zwischenbilder, ein Re-Binning der Spalten der Projektionsbilder dermaßen, dass für ein Zwischenbild diejenigen Spalten der Projektionsbilder verwendet werden, die mit jeweils parallelen Röntgenstrahlen in einer Ebene orthogonal zu den Spalten aufgenommen worden sind. Dies ist im Stand der Technik bekannt, jedoch eignet sich das erfindungsgemäße Verfahren besonders gut für ein solches parallelisiertes Re-Binning.

Gemäß einem bevorzugten Verfahren werden die Zwischenbilder für ein besseres Rekonstruktionsergebnis gefiltert, insbesondere mittels einer Faltung und/oder einer Fouriertransformation. Bei einer bevorzugten Faltung wird ein gefiltertes Zwischenbild mittels eines vordefinierten Kernels, insbesondere eines Rampenfilters wie **z.B.** einem Shepp-Logan-Kernel, berechnet. Bei der alternativen Filterung werden die Zwischenbilder einer Fouriertransformation unterzogen und mit einem angepassten Filter im Fourier-Raum multipliziert. Sowohl die Filterung als auch die Fouriertransformation sind im Grunde im Stand der Technik bekannt.

Gemäß einem bevorzugten Verfahren (einem besonderen iterativen Verfahren) werden nach dem Berechnen der Schichtbilder aus den Zwischenbildern die folgenden Schritte durchgeführt:

i) Rekonstruktion von Vergleichs-Zwischenbildern aus den Schichtbildern basierend auf dem Bewegungsprofil,
ii) Vergleich der Vergleichs-Zwischenbilder mit den Zwischenbildern,
iii) Erstellung von überarbeiteten Schichtbildern basierend auf dem Vergleich,
iv) iterative Wiederholung der Schritte i) bis iii) mit den jeweils zuletzt erstellten Schichtbildern.

Gemäß einem bevorzugten Verfahren werden bei der Rekonstruktion der Vergleichs-Zwischenbilder für jeden Bildpunkt jedes Vergleichs-Zwischenbildes die Bildpunkte der Vergleichs-Zwischenbilder nach den folgenden Schritten ermittelt:

- Berechnung eines Strahls durch die Bild-Voxel ausgehend von einem Bildpunkt des Vergleichs-Zwischenbildes,
- Ermittlung der Bewegungsdaten für einen Bewegungszustand entsprechend der Bildposition im Vergleichs-Zwischenbild aus dem Bewegungsprofil,

- Verschiebung der Positionen von Strahl und Bild-Voxel relativ zueinander entsprechend den Bewegungsdaten des Bewegungsprofils zu dem Bewegungszustand, insbesondere wobei der Strahl entsprechend den Bewegungsdaten bewegt wird,
- Akkumulation von Werten der Bild-Voxel entlang des Strahls mit der relativen Verschiebung von Strahl und Bild-Voxeln,
- Übernahme der akkumulierten Werte für die Position im Vergleichs-Zwischenbild.

Es soll also ein Pixel an der Stelle (p, q) im Zwischenbild mit einem Wert gefüllt werden. Dazu wird ein Strahl berechnet, der durch die Bild-Voxel geht und entsprechend absorbiert wird. Der Wert des (korrekten) Strahls sollte dann eine Akkumulation von Werten der Bild-Voxel entlang des Strahls sein. Nun ist es ja (entsprechend zur Rückprojektion) so, dass sich das Voxelvolumen zu unterschiedlichen Zeiten an unterschiedlichen Orten befunden haben kann. Da jedoch die Spalten-Position p bekannt ist (sie wurde gewählt), ist auch der dazugehörige Bewegungszustand bekannt und damit auch die dazugehörigen Bewegungsdaten aus dem Bewegungsprofil, die entweder direkt aus dem Bewegungsprofil abgeleitet oder interpoliert werden können. Die Interpolation funktioniert dabei entsprechend wie in der Rückprojektion. Mit den entsprechenden Bewegungsdaten können dann Anfangs- und Endpunkt des Strahls entsprechend der Bewegung verschoben werden (insbesondere bei einer rigiden Bewegung) oder es kann alternativ (insbesondere bei einer nicht rigiden Bewegung) die Bild-Voxel verschoben werden. Für diesen (relativ zu den Bild-Voxeln) bewegten Strahl werden die Werte entlang des Strahls akkumuliert und dieser Wert wird an die ursprüngliche Position (p,q) geschrieben. Dabei handelt es sich explizit nicht um die neue Position des Strahls, sondern um das Pixel mit dem begonnen wurde, entsprechend der Iteration durch die Pixel des Zwischenbildes.

Entsprechend umfasst bei einem bevorzugten System die Rekonstruktionseinheit zusätzlich die folgenden Module:

- ein Strahl-Simulationsmodul ausgelegt zur Berechnung eines Strahls durch die Bild-Voxel ausgehend von einem Bildpunkt,
- ein Bewegungs-Simulationsmodul ausgelegt zur Ermittlung der Bewegungsdaten eines Bewegungszustandes entsprechend der Spalten-Bildposition im Vergleichs-Zwischenbild aus dem Bewegungsprofil und zur Verschiebung der Positionen von Strahl und Bild-Voxeln relativ zueinander entsprechend den Bewegungsdaten des Bewegungsprofils zu dem Bewegungszustand,
- ein Simulations-Übernahmemodul ausgelegt zur Akkumulation von Werten der Bild-Voxel entlang des Strahls mit der relativen Verschiebung von Strahl und Bild-Voxeln und zur Übernahme der akkumulierten Werte für die Position im Vergleichs-Zwischenbild.

Dieses iterative Bewegungskompensationsverfahren kann in den Rekonstruktionsprozess eingeschlossen werden, was zu einem bewegungskompensierten Voxelvolumen führt. Würde der Vorwärtsprojektionsschritt zur Erlangung der Vergleichs-Zwischenbilder ohne Berücksichtigung der Bewegung durchgeführt, wären die resultierenden Vergleichs-Zwischenbilder ebenfalls bewegungskompensiert. Sie werden jedoch mit den ursprünglichen (nicht kompensierten) Zwischenbildern verglichen. Somit sollen während des Vorwärtsprojektionsschritts die gleichen Bewegungskompensationsberechnungen wie bei der Rückprojektion durchgeführt werden, nur in der "anderen Richtung". In der Vorwärtsprojektion wird die Bewegung, die im Rückprojektionsschritt entfernt wurde, wieder hinzugefügt (alles basierend auf dem Bewegungsprofil). Im nachfolgenden Rückprojektionsschritt wird die Bewegung wieder kompensiert.

Kurz zusammengefasst werden bei der Vorwärtsprojektion aus den Schichtbildern wieder (Vergleichs-)Zwischenbilder berechnet, diese (Vergleichs-)Zwischenbilder mit den ursprünglichen Zwischenbildern verglichen und die Differenz der Zwischenbilder wird anschließend wieder rückprojiziert und das Ergebnis mit den vorherigen Schichtbildern verrechnet, um ein genaueres Ergebnis zu erzielen. Die neuen genaueren Schichtbilder werden wieder vorwärtsprojiziert und so weiter.

Bevorzugt liegen Komponenten der Erfindung als ein "Cloud-Dienst" vor. Ein solcher Cloud-Dienst dient der Bearbeitung von Daten, insbesondere mittels einer künstlichen Intelligenz, kann aber auch ein Dienst basierend auf herkömmlichen Algorithmen sein oder ein Dienst, bei dem im Hintergrund eine Auswertung durch Menschen stattfindet. Generell ist ein Cloud-Dienst (im Folgenden auch kurz als "Cloud" bezeichnet) eine IT-Infrastruktur, bei der über ein Netzwerk z.B. Speicherplatz oder Rechenleistung und/oder eine Anwendungssoftware zur Verfügung gestellt wird. Die Kommunikation zwischen dem Anwender und der Cloud erfolgt dabei mittels Datenschnittstellen und/oder Datenübertragungs-protokollen. Im hier vorliegenden Fall ist besonders bevorzugt, dass der Cloud-Dienst sowohl Rechenleistung als auch Anwendungssoftware zur Verfügung stellt.

Im Rahmen deines bevorzugten Verfahrens erfolgt eine Bereitstellung von Daten über das Netzwerk an den Cloud-Dienst. Dieser umfasst ein Rechensystem, z.B. einen Computercluster, das in der Regel nicht den lokalen Rechner des Benutzers umfasst. Diese Cloud kann insbesondere durch die medizinische Einrichtung, die auch die medizintechnischen Systeme bereitstellt, zur Verfügung gestellt werden. Beispielsweise werden die Daten einer Bildaufnahme über ein RIS (Radiologieinformationssystem) oder PACS an ein (Remote-) Rechnersystem (die Cloud) gesendet. Bevorzugt stellen das Rechensystem der Cloud, das Netzwerk sowie das medizintechnische System einen Verbund im datentechnischen Sinne dar. Das Verfahren kann dabei mittels einer Befehls-konstellation in dem Netzwerk realisiert werden. Die in der Cloud berechneten Daten ("Ergebnisdaten") werden später wieder über das Netzwerk zu dem lokalen Rechner des Anwenders gesendet.

Die offenbarte Erfindung verbessert die Ergebnisse der Bewegungskompensation für bekannte Bewegungen, insbesondere in Kombination mit dem WFBP-Algorithmus im Vergleich zum Stand der Technik erheblich. Nach der bewegungskompensierten Rekonstruktion verbleiben deutlich weniger Bewegungsartefakte als z.B. bei der Methode von Schäfer et al., wenn man diese mit dem WFBP Algorithmus kombiniert. Der Hauptunterschied besteht darin, dass bei der offenbarten Erfindung der Re-Binning Prozess bei der Bewegungskompensation berücksichtigt wird, was zu einer genaueren Darstellung des in jedem Schritt vorliegenden Bewegungszustands führt, wodurch die verbleibenden Artefakte im Endergebnis reduziert werden.

Eine deutliche Reduzierung der Bewegungsartefakte verbessert die Bildqualität und damit den diagnostischen Wert der resultierenden Bilder. Eine Verbesserung der Bildqualität bei bewegungsverfälschten CT-Scans ist daher für die klinische Praxis sehr wünschenswert, da sie eine höhere Genauigkeit im Diagnoseprozess ermöglicht.

Außerdem kann durch die Erfindung die Notwendigkeit einer Wiederholung von CT-Scans aufgrund von Bewegungsartefakten vermieden werden. Die Wiederholung von CT-Aufnahmen geht mit einer erhöhten Dosis für den Patienten einher, was sehr nachteilhaft ist. Darüber hinaus ist das erneute Aufnehmen von Scans zeitaufwändig und könnte dringend benötigte Ressourcen in Anspruch nehmen.

Bei Projekten mit mobilen CT-Scannern könnte das offenbarte Bewegungskompensationsverfahren zu einer Verbesserung der Bildqualität führen, was die Scanner für die klinische Praxis attraktiver macht.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

Figur 1 eine grob schematische Darstellung eines Computertomographiesystems mit einem Ausführungsbeispiel einer Steuereinrichtung mit einem erfindungsgemäßen System zur Durchführung des Verfahrens,

Figur 2 einen Ablaufplan für einen möglichen Ablauf eines erfindungsgemäßen Verfahrens,

Figur 3 einen ergänzten Ablaufplan für einen möglichen Ablauf eines iterativen Verfahrens,

Figur 4 ein Flussdiagramm für ein bevorzugtes iteratives Verfahren,

Figur 5 eine schematische Darstellung eines bevorzugten Systems,

Figur 6 eine Abbildung von bewegten Voxeln,

Figur 7 ein Re-Binning,

Figur 8 eine Auswahl eines Bewegungszustands,

Figur 9 ein Ergebnis des erfindungsgemäßen Verfahrens im Vergleich.

Bei den folgenden Erläuterungen wird davon ausgegangen, dass es sich bei der bildgebenden Anlage um ein Computertomographiesystem handelt. Grundsätzlich ist das Verfahren aber auch an anderen bildgebenden Anlagen einsetzbar.

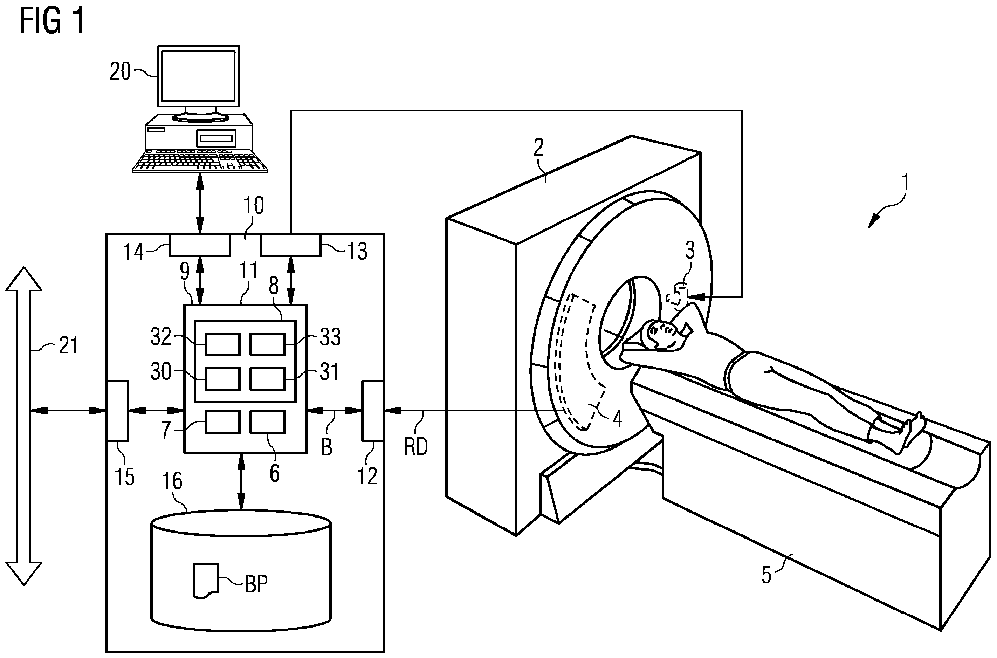

Figur 1 zeigt grob schematisch ein Computertomographiesystem 1 mit einer Steuereinrichtung 10 zur Durchführung des erfindungsgemäßen Verfahrens. Das Computertomographiesystem 1 weist in üblicher Weise einen Scanner 2 mit einer Gantry auf, in der eine Röntgenquelle 3 rotiert, die jeweils einen Patienten durchstrahlt, welcher mittels einer Liege 5 in einen Messraum der Gantry hineingeschoben wird, so dass die Strahlung auf einen der Röntgenquelle 3 jeweils gegenüberliegenden Detektor 4 trifft. Es wird ausdrücklich darauf hingewiesen, dass es sich bei diesem Ausführungsbeispiel nur um ein Beispiel eines CTs handelt und die Erfindung auch an beliebigen CT-Konstruktionen, beispielsweise mit ringförmigem feststehendem Röntgendetektor und/oder mehreren Röntgenquellen genutzt werden kann.

Ebenso sind bei der Steuereinrichtung 10 nur die Komponenten dargestellt, die für die Erläuterung der Erfindung wesentlich sind. Grundsätzlich sind derartige CT-Systeme und zugehörige Steuereinrichtungen dem Fachmann bekannt und brauchen daher nicht im Detail erläutert zu werden.

Eine Kernkomponente der Steuereinrichtung 10 ist hier ein Prozessor 11, auf dem verschiedene Komponenten in Form von Softwaremodulen realisiert sind. Die Steuereinrichtung 10 weist weiterhin eine Terminalschnittstelle 14 auf, an die ein Terminal 20 angeschlossen ist, über das ein Bediener die Steuereinrichtung 10 und somit das Computertomographiesystem 1 bedienen kann. Eine weitere Schnittstelle 15 ist eine Netzwerkschnittstelle zum Anschluss an einen Datenbus 21, um so eine Verbindung zu einem RIS (Radiologieinformationssystem) bzw. PACS (Picture Archiving and Communication System = Bildarchivierungs- und Kommunikationssystem) herzustellen.

Über eine Steuerschnittstelle 13 kann von der Steuereinrichtung 10 der Scanner 2 angesteuert werden, d. h. es werden z.B. die Rotationsgeschwindigkeit der Gantry, die Verschiebung der Patientenliege 5 und die Röntgenquelle 3 selbst gesteuert. Über eine Akquisitionsschnittstelle 12 werden die Rohdaten RD aus dem Detektor 4 ausgelesen. Weiterhin weist die Steuereinrichtung 10 eine Speichereinheit 16 auf, in der u. a. verschiedene Messprotokolle hinterlegt sind.

Als eine Softwarekomponente ist auf dem Prozessor 11 eine (Bilddaten) Rekonstruktionseinheit 18 implementiert, mit welcher aus den über die Datenakquisitions-Schnittstelle 12 erhaltenen Rohdaten RD die gewünschten Bilddaten rekonstruiert werden. Diese Rekonstruktionseinheit 18 Module des Systems 9 zur Bewegungskompensation bei der CT-Rekonstruktion. Das System 9 selber umfasst:

Eine Datenschnittstelle 6, die hier zum Empfang der Rohdaten RD (bzw. die Projektionsbilder B der Datenakquisitions-Schnittstelle 12) ausgelegt ist.

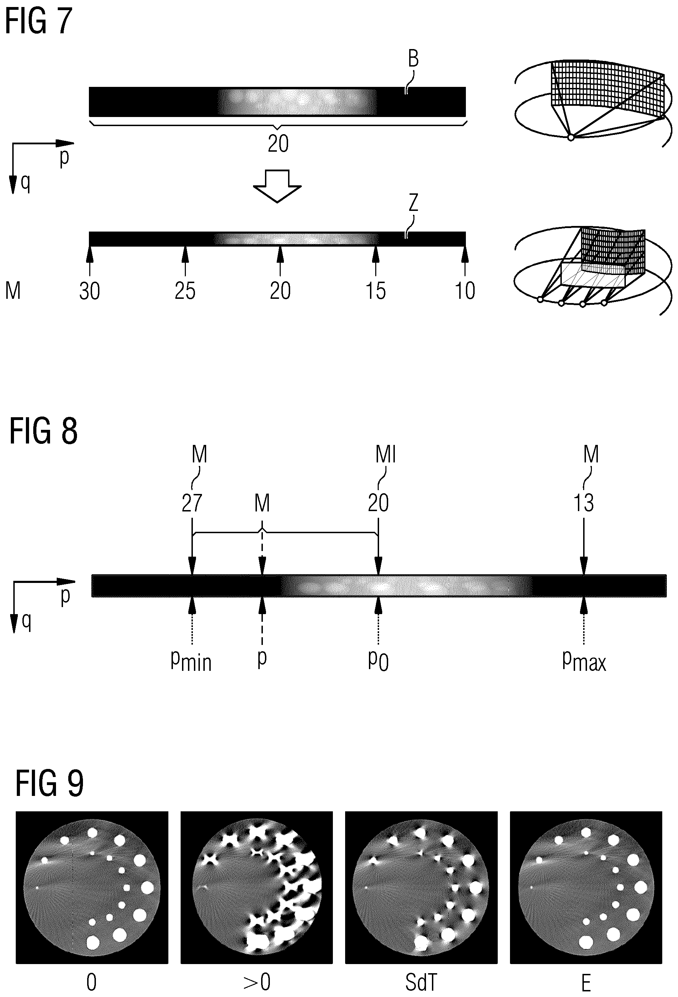

Eine Re-Binning-Einheit 7 ausgelegt zum Erstellen von Zwischenbildern Z, wobei die Zwischenbilder Z hier z.B. wie in Figur 7 gezeigt aus einem Re-Binning mit einer parallelen Strahlführung erstellt werden können.

Die Rekonstruktionseinheit 8 umfasst hier zusätzlich die folgenden Module:

Ein Bewegungsmodul 30 ausgelegt zur Auswahl eines Initial-Bewegungszustands MI für ein Zwischenbild Z oder zur Ermittlung eines geänderten Bewegungszustandes M für ein Voxel V basierend auf dessen berechneter Spalten-Bildposition $p, p'$ in einem Zwischenbild Z. Ein Bewegungszustand M, MI kann also mittels zweier Modi bestimmt werden. Der erste Modus ist das Auswählen eines Bewegungszustands MI. Dies geschieht hier z.B. aufgrund einer Vorgabe durch das aktuell verwendete Zwischenbild Z (s. z.B. Figur 8). Beispielsweise kann die Auswahl so erfolgen, dass ein Bewegungszustand MI ausgewählt wird, der dem Zentrum des Zwischenbildes Z entspricht. Der zweite Modus ist die Ermittlung eines Bewegungszustandes M basierend auf einer berechneten Spalten-Bildposition $p$. Hierzu wird einfach eine Angabe der Spalten-Position benötigt und ein Bewegungszustand M entsprechend ausgewählt, der mit dieser Spalten-Bildposition P (des betreffenden Zwischenbildes Z) verknüpft ist.

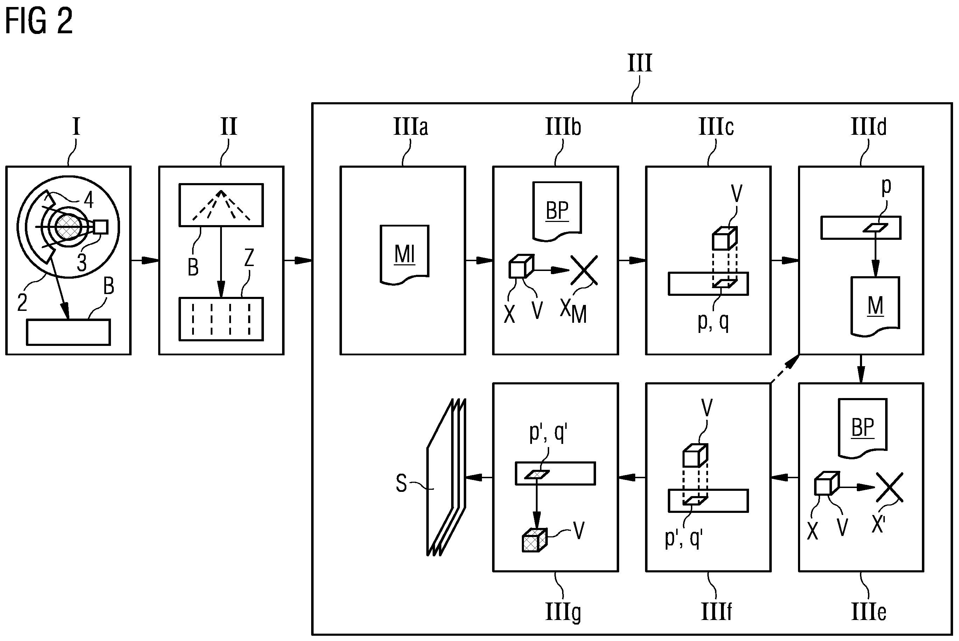

Ein Positionierungsmodul 31 ausgelegt für eine Berechnung einer Voxelposition $x', x_M$ des Voxels V aus dessen ursprünglicher Voxelposition $x$ und dem Bewegungsprofil BP zu einem ausgewählten oder berechneten Bewegungszustand MI, M. Das Positionierungsmodul 31 hat dabei Kontakt zu einem Bewegungsprofil BP, welches hier in der Speichereinheit 16 vorliegt. Die Berechnung einer Voxelposition wird genauer unten zu Figur 2 beschrieben, wobei das Positionierungsmodul 31 hier in der Lage ist, sowohl die Referenz-Voxelposition $x_M$ als auch die geänderte Voxelposition $x'$ zu berechnen.

Ein Abbildungsmodul 32 ausgelegt für eine Berechnung einer Spalten-Bildposition $p, p'$ und einer Zeilen-Bildposition $q, q'$, an der ein Voxel V in einem Zwischenbild Z abgebildet würde. Bezüglich der Referenz-Voxelposition $x_M$ ist es dabei nur notwendig, die Spalten-Bildposition des Voxels V im Zwischenbild Z zu berechnen, es kann aber auch zusätzlich dessen Zeilen-Bildposition $q$ berechnet werden. Für die geänderte Voxelposition $x'$ müssen sowohl die Spalten-Bildposition $p'$ des Voxels im Zwischenbild Z als auch dessen Zeilen-Bildposition $q'$ berechnet werden, damit später die passende Bildinformation dem Voxel V zugeordnet werden kann.

Ein Übernahmemodul 33 ausgelegt zur Übernahme eines Bildwerts des Zwischenbildes Z an der geänderten Bildposition $p', q'$ für die Verwendung für die Rückprojektion. Das Übernahmemodul 33 kann die Übernahme des Bildwerts des Zwischenbildes Z z.B. einfach dadurch erreichen, dass es die Bildinformationen an vorher berechneten Bildkoordinaten $p', q'$ kopiert und in einen Datensatz für die Rückprojektion hineinschreibt.

Figur 2 zeigt einen Ablaufplan für einen möglichen Ablauf eines erfindungsgemäßen Verfahrens zur Bewegungskompensation bei der CT-Rekonstruktion.

In Schritt I erfolgt ein Bereitstellen von Projektionsbildern B eines CT-Scans, wobei hier ein Strahl aus der Röntgenquelle 3 des CT-Scanners 2 nach Figur 1 auf den Detektor 4 gestrahlt und eine Reihe von Projektionsbildern B aufgenommen wird.

In Schritt II erfolgt ein Erstellen von Zwischenbildern Z, wobei die Zwischenbilder Z aus einem Re-Binning von Spalten der Projektionsbilder B erstellt werden. Hier werden parallelisierte Zwischenbilder Z aus Projektionsbildern B erstellt, die mit einem konusförmigen Strahl aufgenommen worden sind.

In Schritt III erfolgt ein Berechnen von Schichtbildern S mittels einer Rückprojektion der Zwischenbilder Z auf vorbestimmte Voxel V der Schichtbilder S, wobei für jedes Zwischenbild Z und für jedes Voxel V basierend auf einem vorgegebenen Bewegungsprofil BP der Voxel V während der Aufnahme der Projektionsbilder B die folgenden Schritte durchgeführt werden:

In Schritt IIIa erfolgt eine Auswahl eines Initial-Bewegungszustands MI basierend auf dem Zwischenbild Z. Dieser kann z.B. einer Koordinate genau im Zentrum (z.B. in der Bildmitte) des Zwischenbildes Z entsprechen.

In Schritt IIIb erfolgt eine Berechnung einer Referenz-Voxelposition $x_M$ des Voxels V aus dessen ursprünglicher Voxelposition x und aus dem Bewegungsprofil BP zu dem Initial-Bewegungszustand MI. Das Voxel V hat sich möglicherweise im Initial-Bewegungszustand MI zur ursprünglichen Voxelposition x zur Referenz-Voxelposition $x_M$ bewegt. Dieser Bewegung wird hier Rechnung getragen.

In Schritt IIIc erfolgt eine Berechnung einer Spalten-Bildposition p, an der das Voxel V an der Referenz-Voxelposition xM im Zwischenbild Z abgebildet würde. Hier wird die komplette Bildposition p, q berechnet, wobei die Zeilen-Bildposition q hier nicht unbedingt benötigt wird. Dies kann z.B. mit einer Projektion des Voxels V auf das Zwischenbild Z erfolgen.

In Schritt IIId erfolgt eine Ermittlung eines geänderten Bewegungszustandes M des Voxels V basierend auf der berechneten Spalten-Bildposition p.

In Schritt IIIe erfolgt eine Berechnung einer geänderten Voxelposition x' des Voxels V aus dessen ursprünglicher Voxelposition x und dem Bewegungsprofil BP zu dem geänderten Bewegungszustand M.

In Schritt IIIf erfolgt eine Berechnung einer geänderten Bildposition p', q', an der das Voxel V an der geänderte Voxelposition x' im Zwischenbild Z abgebildet würde.

In Schritt IIIg erfolgt eine Verwendung eines Bildwerts des Zwischenbildes Z an der geänderten Bildposition p', q' für die Rückprojektion.

Mit einem gestrichelten Pfeil ist angedeutet, dass in Form einer iterativen Verbesserung des Ergebnisses die Schritte IIId bis IIIf erneut bzw. mehrfach durchlaufen werden können, wobei in Schritt IIId dann die geänderte Spalten-Bildposition p' die Basis bildet.

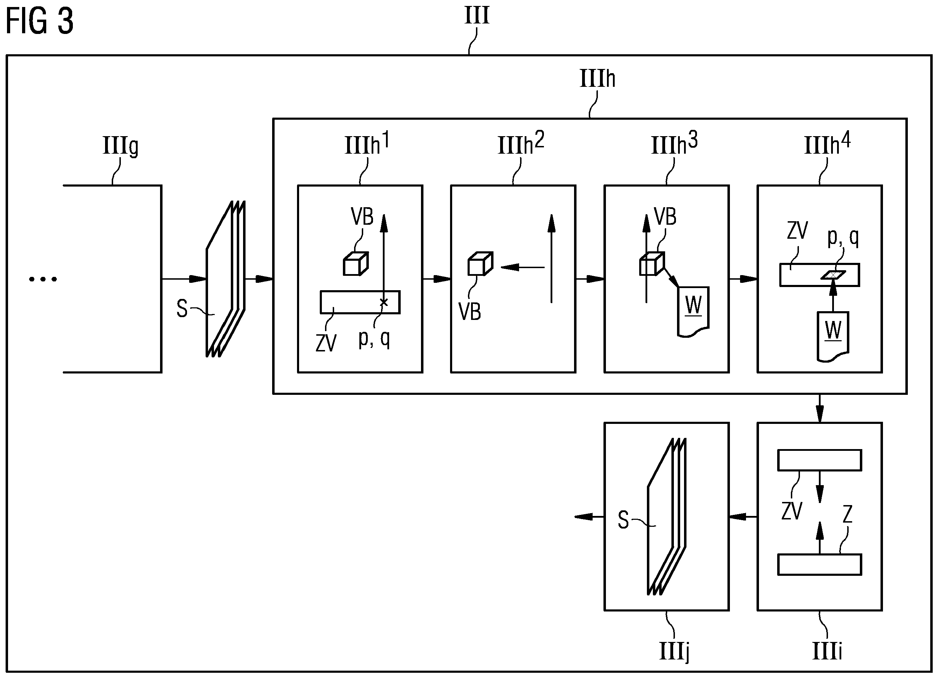

Figur 3 zeigt einen ergänzten Ablaufplan für einen möglichen Ablauf eines iterativen Verfahrens, wobei nach dem Berechnen der Schichtbilder S aus den Zwischenbildern Z nach Figur 2 die folgenden Schritte durchgeführt werden:
In Schritt IIIh erfolgt eine Rekonstruktion von Vergleichs-Zwischenbildern ZV aus den Schichtbildern basierend auf dem Bewegungsprofil BP. Dieser Schritt teilt sich hier in vier Unterschritte auf.

In Schritt IIIh[1] erfolgt eine Berechnung eines Strahls durch die Bild-Voxel VB ausgehend von einem Bildpunkt des Vergleichs-Zwischenbildes ZV.

In Schritt IIIh[2] erfolgt eine Ermittlung der Bewegungsdaten für einen Bewegungszustand M entsprechend der Spalten-Bildposition p im Vergleichs-Zwischenbild ZV aus dem Bewegungsprofil BP und Verschiebung der Positionen von Strahl und Bild-Voxeln VB relativ zueinander entsprechend den Bewegungsdaten des Bewegungsprofils BP zu dem Bewegungszustand M, insbesondere wobei der Strahl entsprechend den Bewegungsdaten bewegt wird.

In Schritt IIIh[3] erfolgt eine Akkumulation von Werten der Bild-Voxel VB entlang des Strahls mit der relativen Verschiebung von Strahl und Bild-Voxeln VB.

In Schritt IIIh[4] erfolgt eine eine Übernahme der akkumulierten Werte für die Position p, q im Vergleichs-Zwischenbild ZV.

In Schritt IIIi erfolgt ein Vergleich der Vergleichs-Zwischenbilder ZV mit den Zwischenbildern Z.

In Schritt IIIj erfolgt eine Erstellung von überarbeiteten Schichtbildern S basierend auf dem Vergleich.

Die Schritte IIIh, IIIi und IIIj werden iterativ mit den jeweils zuletzt erstellten Schichtbildern S wiederholt.

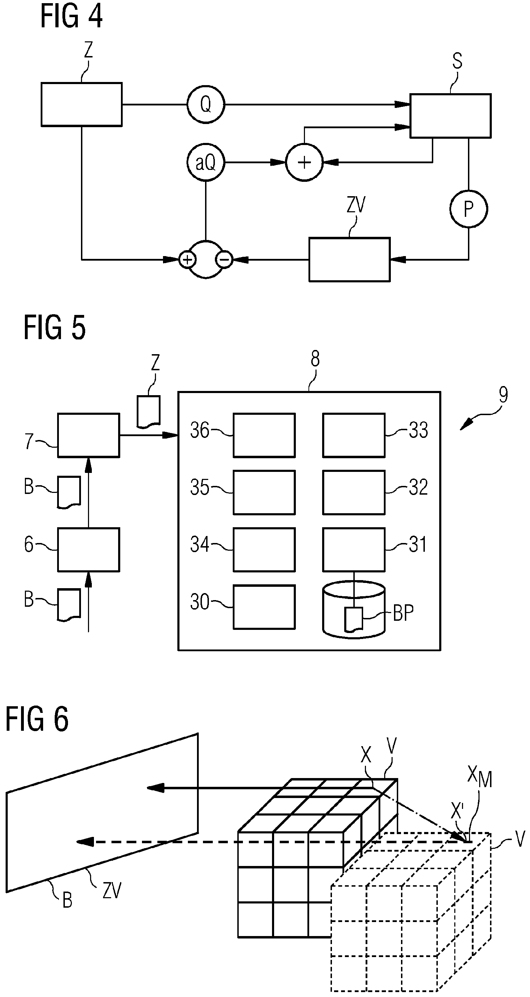

Figur 4 zeigt ein Flussdiagramm für ein bevorzugtes iteratives Verfahren.

Aus den Zwischenbildern Z (In der folgenden Formel mit Z0 bezeichnet) werden wie vorangehend beschrieben Schichtbilder S mittels einer Rückwärtsprojektion Q erzeugt. Diese Rückprojektion Q vereint die Faltung und die Rückprojektion selbst in einem Schritt. Das erste Schichtbild S (in der Formel $f_0$) wird iterativ mit jedem Durchgang ($f_k$) verbessert. Eine Vorwärtsprojektion (In der Formel P) berechnet aus einem Schichtbild S ein Vergleichs-Zwischenbild ZV (gemäß $P(f_k)$).

Danach wird die Differenz aus dem Vergleichs-Zwischenbild ZV und dem ursprünglichen Zwischenbild Z berechnet: $P(f_k) - Z0$. Das Ergebnis wird wieder rückprojiziert: $Q(P(f_k) - Z0)$ und das Ergebnis von dem vorherigen Schichtbild mit einem Faktor a abgezogen: $fk-aQ(P(f_k) - Z0)$. Dies ergibt das nächste Schichtbild $f_{k+1}$ und die Schritte werden anschließend wiederholt.

Bei der Vorwärtsprojektion wird die Bewegung eingefügt anstatt entfernt wie bei der Rückprojektion. Das Schichtbild S ist nach der bewegungskompensierten Rückprojektion idealerweise frei von Bewegung. Bei der Vorwärtsprojektion wird für jedes Vergleichs-Zwischenbild ZV nicht mehr durch die Voxel, sondern durch die Positionen (p, q) des Vergleichs-Zwischenbildes ZV iteriert. Für jede Position im Vergleichs-Zwischenbild ZV wird der dazugehörige Strahl durch das entsprechende Voxelvolumen berechnet und die Werte des Voxelvolumens entlang des berechneten Strahls werden an die Position im Vergleichs-Zwischenbild ZV geschrieben.

Da die Position im Vergleichs-Zwischenbild ZV bekannt ist, kann zum miteinbeziehen der Bewegung der zur jeweiligen Spalten-Bildposition p gehörende Bewegungszustand M bestimmt werden. Beispielsweise kann dieser Bewegungszustand M genutzt werden, um den Strahl durch das Voxelvolumen zu bewegen, statt das gesamte Voxelvolumens selbst. Im Prinzip ist aber beides möglich. Nun können die Werte entlang des neu berechneten Strahls in die zugehörige Position in das Vergleichs-Zwischenbild ZV geschrieben werden. Dadurch wird ein Vergleichs-Zwischenbild ZV berechnet, welches ebenfalls die Bewegung enthält.

Figur 5 zeigt eine schematische Darstellung eines bevorzugten Systems 9. Ein grundsätzlicher Aufbau des Systems 9 wurde bereits in Figur 1 gezeigt, diese bevorzugte Ausführungsform weist jedoch neben der Datenschnittstelle 6, Re-Binning-Einheit 7 und den in Figur 1 dargestellten Modulen Bewegungsmodul 30, Positionierungsmodul 31, Abbildungsmodul 32 und Übernahmemodul 33 noch weitere Module in der Rekonstruktionseinheit 8 auf, mit denen das System 9 für ein Verfahren ausgelegt ist, wie es in Figur 3 gezeigt ist. Diese zusätzlichen Module sind:

Ein Strahl-Simulationsmodul 34 ausgelegt zur Berechnung eines Strahls durch die Bild-Voxel VB ausgehend von einem Bildpunkt.

Ein Bewegungs-Simulationsmodul 35 ausgelegt zur Ermittlung der Bewegungsdaten eines Bewegungszustandes M entsprechend der Spalten-Bildposition p im Vergleichs-Zwischenbild ZV aus dem Bewegungsprofil BP und zur Verschiebung der Positionen von Strahl und Bild-Voxeln VB relativ zueinander entsprechend den Bewegungsdaten des Bewegungsprofils BP zu dem Bewegungszustand M.

Ein Simulations-Übernahmemodul 36 ausgelegt zur Akkumulation von Werten der Bild-Voxel VB entlang des Strahls mit der relativen Verschiebung von Strahl und Bild-Voxeln VB und zur Übernahme der akkumulierten Werte für die Position p, q im Vergleichs-Zwischenbild.

Figur 6 zeigt eine Abbildung von bewegten Voxeln V. Der Durchgezogene Würfel zeigt 27 Voxel V, von denen das Voxel V rechts oben hinten in seiner ursprünglichen Voxelposition x auf einem Bild abgebildet wird. Dieses Bild war bei der Aufnahme das Projektionsbild B und ist bei einem iterativen Verfahren (s. Figur 3) das Vergleichs Zwischenbild ZV. Wie man sieht, durchquert ein Strahl (durchgezogener Pfeil) bei seinem Weg zum Bild mehrere Voxel, so dass der Bildwert auf dem Bild nicht unbedingt mit dem Bildwert des Voxels übereinstimmen muss (und dies in der Regel nicht tut, daher die aufwändige Rückprojektion).

Die Darstellung könnte mit umgedrehten Pfeilen auch ein Zwischenbild Z zeigen.

Nun bewegt sich der Würfel während einer Aufnahme entlang des strichpunktierten Pfeils an eine andere Position, die mit einem gestrichelten Würfel angedeutet ist. Das Voxel befindet sich nach der Bewegung (je nach Bewegungszustand MI, M) an einer Referenz-Voxelposition $x_M$ oder einer geänderten Voxelposition x' und wird an einer vollkommen anderen Stelle auf dem Bild abgebildet (gestrichelter Pfeil).

Die hier gezeigte Bewegung ist eine sehr einfache, bei der die Voxel danach noch alle in ihrem ursprünglichen Verband vorliegen. In der Realität ist diese Bewegung in der Regel komplizierter und jedes Voxel kann sich individuell bewegen, jedoch liegt bei einer normalen Untersuchung stets ein geschlossener Verband vor, in dem sich benachbarte Voxel sehr ähnlich bewegen. Beispielsweise bewegt sich ein schlagendes Herz zwar, dessen Wand bildet aber (glücklicher Weise) stets einen geschlossenen Körper.

Figur 7 zeigt ein Re-Binning eines Projektionsbildes B (oben), welches mit einem konischen Strahlprofil auf einer schraubenförmigen Trajektorie aufgenommen wurde (s. Skizze rechts) zu einem Zwischenbild Z (unten). Aufgrund der beim Re-Binning durchgeführten Berechnungen ändert sich der Bewegungszustand M des Zwischenbildes Z mit den Spalten (Richtung p), aber nicht mit den Zeilen (Richtung q). Das Zentrum des Zwischenbildes Z beinhaltet hier den gleichen Bewegungszustand M wie das Projektionsbild B vor dem Re-Binning. Bei einer Bewegung nach rechts im Bild sind die vorherigen Bewegungszustände M vorhanden, bei einer Bewegung nach links im Bild die nachfolgenden Bewegungszustände M. Die genaue Position jedes Bewegungszustandes M im Zwischenbild Z muss individuell berechnet werden, da er von mehreren Parametern abhängt.

Betrachtet man die Skizze unten rechts, so wird offensichtlich, dass das Zwischenbild Z in diesem Beispiel keine vollständig parallele Geometrie aufweist, sondern lediglich eine semi-parallele. Nur wenn man die Strahlen in p-Richtung betrachtet, sind die Strahlen vollständig parallel. Entlang der q-Richtung ist dies nicht der Fall. Dies stellt jedoch kein Problem für die Erfindung dar, da die q-Koordinate lediglich zur Auswahl der Bildwerte benötigt wird und leicht bestimmt werden kann.

Figur 8 zeigt eine Auswahl eines Bewegungszustands M und skizziert die Ermittlung einer Bewegung der Voxelposition x'.

Das genaueste Bewegungskompensationsverfahren wäre, die exakte Bewegung für jeden Bewegungszustand (also in jeder Spalten-Bildposition p) jedes Zwischenbildes Z für den Rückprojektionsschritt zu verwenden. Dies führt jedoch bei der aktuellen Implementierung der Rekonstruktionsalgorithmen zu Speicherproblemen. Hierzu kann ein Kompromiss angewandt werden, mit dem man mit einem geringeren Aufwand an Speicher zu guten Ergebnissen gelangt.

Dafür werden bei der Rückprojektion der Zwischenbilder Z für eine Anzahl der Zwischenbilder Z, insbesondere für jedes Zwischenbild Z aus dem Bewegungsprofil BP für den Initial-Bewegungszustand MI und zumindest für einen früheren und zumindest einen späteren Bewegungszustand M Bewegungsdaten aus dem Bewegungsprofil BP vorausgewählt. Hier sind dies neben dem initial-Bewegungszustand MI mit der Zahl 20 die Bewegungszustände M 27 und 13.

Es werden also hier für ein (jedes) Zwischenbild Z drei Bewegungszustände MI, M verwendet, einer im Zentrum, einer links und einer rechts. Die dazwischenliegenden Bewegungen werden z.B. mit linearer Interpolation aus den vorab gewählten Bewegungsdaten an den Stellen 13, 20 und 27 interpoliert. Es muss jedoch berücksichtigt werden, dass die linken und rechten Bewegungszustände M nicht unbedingt am weitesten links oder rechts liegen müssen, da diese Bereiche des Zwischenbildes Z je nach Parametern wie dem Sichtfeld möglicherweise nicht erreicht werden. Die beste Position kann unter Berücksichtigung dieser Parameter individuell berechnet werden.

Es kann also nun der Bewegungszustand M (bei p über der geschweiften Klammer) berechnet werden und die geänderte Voxelposition x' des Voxels V basierend auf vorausgewählten Bewegungsdaten zu den Bewegungszuständen 27 und 13 basierend auf interpolierten Bewegungsdaten berechnet werden. Die Nähe zu benachbarten Bewegungszuständen M kann dabei in Form einer Wichtung eingehen.

Figur 9 zeigt ein Ergebnis des erfindungsgemäßen Verfahrens im Vergleich. Die Bilder zeigen einen simulierten Scan eines mit dem WFBP-Algorithmus rekonstruierten Uhrenphantoms.

Links (0) ist ein Bild von dem unbewegten Objekt als Referenz gezeigt, welches abgebildet werden soll, bzw. dessen Rekonstruktionsergebnis, wie es nach einer Rekonstruktion idealer Weise aussehen sollte. Rechts daneben (>0) ist ein Bild von einem bewegten Objekt gezeigt (bei einer Translation) bzw. dessen Rekonstruktionsergebnis bei unkompensierter Bewegung. Es sind gravierende Artefakte zu erkennen, die durch die Bewegung hervorgerufen worden sind. Diese Abbildung soll durch die Erfindung verbessert werden.

Als drittes Bild (SdT) ist eine Rekonstruktion gemäß dem Stand der Technik gezeigt (Bewegungskompensationsverfahren nach Schäfer et. al.), wenn man diesen mit dem WFBP Algorithmus kombiniert. Zwar konnten die Artefakte bedeutend reduziert werden, jedoch sind noch einige Artefakte vorhanden, die daher stammen, dass stellenweise die falsche Bildinformation den Voxeln bei der Rekonstruktion zugewiesen wurde.

Im rechten Bild (E) ist eine Rekonstruktion gemäß dem erfindungsgemäßen Verfahren dargestellt, wobei das Verfahren lediglich ein einziges Mal angewandt wurde (und keine zusätzlichen Iterationsschritte). Es sind so gut wie keine Bewegungsartefakte zu erkennen. Hierzu ist zu sagen, dass das rechte und linke Bild zwar auf den ersten Blick identisch aussehen, bei näherer Betrachtung (z.B. einer Subtraktion) jedoch leichte Unterschiede erkennbar werden. In dem hier dargestellten Fall war die Bewegung des Objekts zu 100% bekannt. Kompliziertere Bewegungen könnten auch in dem erfindungsgemäßen Verfahren leichte Artefakte hervorrufen, die jedoch mit Iterationen des Verfahrens reduziert werden können.

Es wird abschließend noch einmal darauf hingewiesen, dass es sich bei den vorhergehend detailliert beschriebenen Verfahren sowie bei dem dargestellten Computertomographiesystem 1 lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Modul" nicht aus, dass die betreffenden Komponenten aus mehreren zusammenwirkenden Teil-Komponenten bestehen, die gegebenenfalls auch räumlich verteilt sein können. Der Begriff "eine Anzahl" ist als "mindestens eins" zu verstehen.

**Patentansprüche**

1.  Verfahren zur Bewegungskompensation bei der CT-Rekonstruktion umfassend die Schritte:

    - Bereitstellen von Projektionsbildern (B) eines CT-Scans,
    - Erstellen von Zwischenbildern (Z), wobei die Zwischenbilder (Z) aus einem Re-Binning von Spalten der Projektionsbilder (B) erstellt werden,
    - Berechnen von Schichtbildern (S) mittels einer Rückprojektion der Zwischenbilder (Z) auf vorbestimmte Voxel (V) der Schichtbilder (S), wobei für jedes Zwischenbild (Z) und für jedes Voxel (V) basierend auf einem vorgegebenen Bewegungsprofil (BP) der Voxel (V) während der Aufnahme der Projektionsbilder (B) die folgenden Schritte durchgeführt werden:

        a) Auswahl eines Initial-Bewegungszustands (MI) basierend auf dem Zwischenbild (Z),
        b) Berechnung einer Referenz-Voxelposition ($x_M$) des Voxels (V) aus dessen ursprünglicher Voxelposition (x) und aus dem Bewegungsprofil (BP) zu dem Initial-Bewegungszustand (MI),
        c) Berechnung einer Spalten-Bildposition (p), an der das Voxel (V) an der Referenz-Voxelposition ($x_M$) im Zwischenbild (Z) abgebildet würde,
        d) Ermittlung eines geänderten Bewegungszustandes (M) des Voxels (V) basierend auf der berechneten Spalten-Bildposition (p),
        e) Berechnung einer geänderten Voxelposition (x') des Voxels (V) aus dessen ursprünglicher Voxelposition (x) und dem Bewegungsprofil (BP) zu dem geänderten Bewegungszustand (M),
        f) Berechnung einer geänderten Bildposition (p', q'), an der das Voxel (V) an der geänderte Voxelposition (x') im Zwischenbild (Z) abgebildet würde,
        g) Verwendung eines Bildwerts des Zwischenbildes (Z) an der geänderten Bildposition (p', q') für die Rückprojektion.

**2.** Verfahren nach Anspruch 1, wobei der Initial-Bewegungszustand (MI) einer Spalten-Bildposition (p) entspricht, die im Wesentlichen im Zentrum des Zwischenbildes (Z) liegt und bevorzugt ein solcher Initial-Bewegungszustand (MI) für jedes Zwischenbild (Z) ausgewählt wird.

**3.** Verfahren nach Anspruch 2, wobei als Zentrum derjenigen Spalte im Zwischenbild (Z) entspricht, die in einem der Projektionsbilder (P) genau in der Bildmitte lag.

**4.** Verfahren nach einem der vorangehenden Ansprüche, wobei bei der Rückprojektion der Zwischenbilder (Z) für eine Anzahl der Zwischenbilder (Z), insbesondere für jedes Zwischenbild (Z) für den Initial-Bewegungszustand (MI) und zumindest für einen früheren und zumindest einen späteren Bewegungszustand (M) Bewegungsdaten aus dem Bewegungsprofil (BP) vorausgewählt werden, aus diesen Bewegungsdaten die Bewegungsdaten zu dem geänderten Bewegungszustand (M) interpoliert werden und die geänderte Voxelposition (x') des Voxels (V) basierend auf diesen interpolierten Bewegungsdaten zu dem geänderten Bewegungszustand (M) berechnet wird, bevorzugt wobei die Interpolation auf denjenigen Bewegungszuständen (M) basiert, die dem geänderten Bewegungszustand (M) am nächsten liegen, bevorzugt wobei der Abstand der Bildpositionen der Bewegungszustände (M) in Form einer Wichtung eingeht.

**5.** Verfahren nach einem der vorangehenden Ansprüche, wobei vor dem Verwenden des Bildwerts für die Rückprojektion zwischen den Schritten e) und f) die folgenden Schritte mindestens einmal durchlaufen werden:

- Berechnung einer geänderten Spalten-Bildposition (p'), an der das Voxel (V) an der geänderten Voxelposition (x') im Zwischenbild (Z) abgebildet würde,
- Ermittlung eines geänderten Bewegungszustandes (M) des Voxels (V) basierend auf der geänderten Spalten-Bildposition (p'),
- Berechnung einer geänderten Voxelposition (x') des Voxels (V) aus dessen ursprünglicher Voxelposition (x) und dem Bewegungsprofil (BP) zu dem geänderten Bewegungszustand (M) .

**6.** Verfahren nach einem der vorangehenden Ansprüche, wobei beim Erstellen der Zwischenbilder (Z), ein Re-Binning der Spalten der Projektionsbilder (B) dermaßen erfolgt, dass für ein Zwischenbild (Z) diejenigen Spalten der Projektionsbilder (B) verwendet werden, die mit jeweils parallelen Röntgenstrahlen in einer Ebene orthogonal zu den Spalten aufgenommen worden sind.

**7.** Verfahren nach einem der vorangehenden Ansprüche, wobei die Zwischenbilder (Z) für ein besseres Rekonstruktionsergebnis gefiltert werden, insbesondere mittels einer Faltung und/oder einer Fouriertransformation, wobei bei einer bevorzugten Faltung ein gefiltertes Zwischenbild (Z) mittels eines vordefinierten Kernels, insbesondere eines Rampenfilters wie z.B. einem Shepp-Logan-Kernel, berechnet wird und/oder ein Zwischenbild (Z) bevorzugt einer Fouriertransformation unterzogen und mit einem angepassten Filter im Fourier-Raum multipliziert wird.

**8.** Verfahren nach einem der vorangehenden Ansprüche, wobei nach dem Berechnen der Schichtbilder (S) aus den Zwischenbildern (Z) die folgenden Schritte durchgeführt werden:

i) Rekonstruktion von Vergleichs-Zwischenbildern (ZV) aus den Schichtbildern basierend auf dem Bewegungsprofil (BP),
ii) Vergleich der Vergleichs-Zwischenbilder (ZV) mit den Zwischenbildern (Z),
iii) Erstellung von überarbeiteten Schichtbildern (S) basierend auf dem Vergleich,
iv) iterative Wiederholung der Schritte i) bis iii) mit den jeweils zuletzt erstellten Schichtbildern (S).

**9.** Verfahren nach Anspruch 8, wobei bei der Rekonstruktion der Vergleichs-Zwischenbilder (ZV) für jeden Bildpunkt jedes Vergleichs-Zwischenbildes (ZV) die Bildpunkte der Vergleichs-Zwischenbilder (ZV) nach den folgenden Schritten ermittelt werden:

- Berechnung eines Strahls durch die Bild-Voxel (VB) ausgehend von einem Bildpunkt des Vergleichs-Zwischenbildes (ZV),
- Ermittlung der Bewegungsdaten für einen Bewegungszustand (M) entsprechend der Spalten-Bildposition (p) im Vergleichs-Zwischenbild (ZV) aus dem Bewegungsprofil (BP),
- Verschiebung der Positionen von Strahl und Bild-Voxeln (VB) relativ zueinander entsprechend den Bewegungsdaten des Bewegungsprofils (BP) zu dem Bewegungszustand (M), insbesondere wobei der Strahl entsprechend den Bewegungsdaten bewegt wird,

- Akkumulation von Werten der Bild-Voxel (VB) entlang des Strahls mit der relativen Verschiebung von Strahl und Bild-Voxeln (VB),
- Übernahme der akkumulierten Werte für die Position (p, q) im Vergleichs-Zwischenbild (ZV).

**10.** System (9) zur Bewegungskompensation bei der CT-Rekonstruktion, umfassend Mittel zur Durchführung eines Verfahrens nach einem der vorangehenden Ansprüche.

**11.** Steuereinrichtung (10) zur Steuerung eines Computertomographiesystems (1) umfassend ein System nach Anspruch 10 und/oder ausgelegt für die Durchführung eines Verfahrens nach einem der Ansprüche 1 bis 9.

**12.** Computertomographiesystem umfassend eine Steuereinrichtung (10) nach Anspruch 11.

**13.** Computerprogrammprodukt mit einem Computerprogramm, welches direkt in eine Speichereinrichtung einer Steuereinrichtung (10) eines Computertomographiesystems (1) ladbar ist, mit Programmabschnitten, um alle Schritte des Verfahrens nach einem der Ansprüche 1 bis 9 auszuführen, wenn das Computerprogramm in der Steuereinrichtung (10) des Computertomographiesystems (1) ausgeführt wird.

**14.** Computerlesbares Medium, auf welchem von einer Rechnereinheit einlesbare und ausführbare Programmabschnitte gespeichert sind, um alle Schritte des Verfahrens nach einem der Ansprüche 1 bis 9 auszuführen, wenn die Programmabschnitte von der Rechnereinheit ausgeführt werden.

**Claims**

**1.** Method for motion compensation in CT reconstruction comprising the steps:

- providing projection images (B) of a CT scan,
- creating intermediate images (Z), wherein the intermediate images (Z) are created from a rebinning of gaps in the projection images (B),
- calculating slice images (S) by means of a back projection of the intermediate images (Z) on predetermined voxels (V) of the slice images (S), wherein for each intermediate image (Z) and for each voxel (V) based on a predetermined motion profile (BP) of the voxels (V) during the recording of the projection images (B), the following steps are carried out:

a) selecting an initial state of motion (MI) based on the intermediate image (Z),
b) calculating a reference voxel position ($x_M$) of the voxel (V) from its original voxel position (x) and from the motion profile (BP) relating to the initial state of motion (MI),
c) calculating a gap image position (p), at which the voxel (V) at the reference voxel position (xM) has been mapped in the intermediate image (Z),
d) determining an amended state of motion (M) of the voxel (V) based on the calculated gap image position (p),
e) calculating an amended voxel position (x') of the voxel (V) from its original voxel position (x) and the motion profile (BP) relating to the amended state of motion (M),
f) calculating an amended image position (p', q') at which the voxel (V) has been mapped at the amended voxel position (x') in the intermediate image (Z),
g) using an image value of the intermediate image (Z) at the amended image position (p', q') for the back projection.

**2.** Method according to claim 1, wherein the initial state of motion (MI) corresponds to a gap image position (p), which lies substantially in the centre of the intermediate image (Z) and one such initial state of motion (MI) is preferably selected for each intermediate image (Z).

**3.** Method according to claim 2, wherein that gap in the intermediate image (Z), which lay precisely in the centre of the image in one of the projection images (P), corresponds as the centre.

**4.** Method according to one of the preceding claims, wherein with the back projection of the intermediate images (Z) for a number of intermediate images (Z), in particular for each intermediate image (Z) for the initial state of motion (MI) and at least for an earlier and at least one later state of motion (M), motion data is preselected from the motion profile (BP), the motion data relating to the amended state of motion (M) is interpolated from this motion data and the amended voxel position (x') of the voxel (V) is calculated on the basis of this interpolated motion data relating to the amended state of motion (M), preferably wherein the interpolation is based on those states of motion (M) which lie closest to the amended state of motion (M), preferably wherein the distance between the image positions of the states of motion (M) are incorporated in the form of a weighting.

5. Method according to one of the preceding claims, wherein the following steps are run through at least once before using the image value for the back projection between the steps e) and f):

- calculating an amended gap image position (p') at which the voxel (V) has been mapped at the amended voxel position (x') in the intermediate image (Z),
- determining an amended state of motion (M) of the voxel (V) based on the amended gap image position (p'),
- calculating an amended voxel position (x') of the voxel (V) from its original voxel position (x) and the motion profile (BP) relating to the amended state of motion (M).

6. Method according to one of the preceding claims, wherein when the intermediate images (Z) are created, a rebinning of the gaps of the projection images (B) is carried out to such an extent that those gaps in the projection images (B), which have been recorded with in each case parallel x-rays in a plane orthogonal to the gaps, are used for an intermediate image (Z).

7. Method according to one of the preceding claims, wherein the intermediate images (Z) are filtered for an improved reconstruction result, in particular by means of a folding and/or a Fourier transform, wherein with a preferred folding, a filtered intermediate image (Z) is calculated by means of a predefined kernel, in particular a ramp filter, such as e.g. a Shepp-Logan kernel, and/or an intermediate image (Z) is preferably subject to a Fourier transform and multiplied by an adjusted filter in the Fourier space.

8. Method according to one of the preceding claims, wherein after calculating the slice images (S) from the intermediate images (Z), the following steps are carried out:

i) reconstruction of comparison intermediate images (ZV) from the slice images based on the motion profile (BP),
ii) comparison of the comparison intermediate images (ZV) with the intermediate images (Z),
iii) creation of revised slice images (S) based on the comparison,
iv) iterative repetition of the steps i) to iii) with the slice images (S) created last.

9. Method according to claim 8, wherein with the reconstruction of the comparison intermediate images (ZV) for each pixel of each comparison intermediate image (ZV), the pixels of the comparison intermediate images (ZV) are determined according to the following steps:

- calculating a beam through the image voxel (VB) starting from a pixel of the comparison intermediate image (ZV),
- determining the motion data for a state of motion (M) corresponding to the gap image position (p) in the comparison intermediate image (ZV) from the motion profile (BP),
- shifting the positions of beam and image voxels (VB) relative to one another corresponding to the motion data of the motion profile (BP) relating to the state of motion (M), in particular wherein the beam is moved according to the motion data,
- accumulating values of the image voxel (VB) along the beam with the relative shift in beam and image voxels (VB),
- taking over the accumulated values for the position (p, q) in the comparison intermediate image (ZV).

10. System (9) for motion compensation in CT reconstruction, comprising means for carrying out a method according to one of the preceding claims.

11. Control facility (10) for controlling a computed tomography system (1) comprising a system according to claim 10 and/or designed to carry out a method according to one of claims 1 to 9.

12. Computed tomography system comprising a control facility (10) according to claim 11.

13. Computer program product with a computer program, which can be loaded directly into a storage facility of a control facility (10) of a computed tomography system (1), having program segments in order to carry out all steps of the method according to one of claims 1 to 9 when the computer program is executed in the control facility (10) of the computed tomography system (1).

14. Computer-readable medium, on which program segments which can be read in and executed by a computer unit are stored, in order to execute all steps of the method according to one of claims 1 to 9 when the program segments are executed by the computer unit.


**Revendications**

1. Procédé de compensation du mouvement dans la reconstruction CT comprenant les stades :

  - se procurer des images (B) de projection d'un scan CT,
  - établir des images (Z) intermédiaires, dans lequel les images (Z) intermédiaires sont établies à partir d'un re-binning de colonnes des images (B) de projection,
  - calculer des images (S) panoramiques au moyen d'une rétroprojection des images (Z) intermédiaires sur des voxels (V) déterminés à l'avance des images (S) panoramiques, dans lequel, pour chaque image (Z) intermédiaire et, pour chaque voxel (V), on effectue, sur la base d'un profil (BP) de mouvement donné à l'avance du voxel (V) pendant l'enregistrement des images (B) de projection, les stades suivants :

    a) sélection d'un état (MI) de mouvement initial sur la base de l'image (Z) intermédiaire,
    b) calcul d'une position ($x_M$) de voxel de référence du voxel (V) à partir de sa position (x) initiale de voxel et à partir du profil (BP) de déplacement par rapport à l'état (MI) de déplacement initial,
    c) calcul d'une position (p) d'image de colonnes, où le voxel (V) serait reproduit à la position ($x_M$) de voxel de référence dans l'image (Z) intermédiaire,
    d) détermination d'un état (M) de mouvement modifié du voxel (V) sur la base de la position (p) d'image de colonnes calculée,
    e) calcul d'une position (x') de voxel modifiée du voxel (V) à partir de sa position (x) initiale de voxel et du profil (BP) de mouvement par rapport à l'état (M) de mouvement modifié,
    f) calcul d'une position (p', q') d'image modifiée, où le voxel (V) serait reproduit à la position (x') de voxel modifiée dans l'image (Z) intermédiaire,
    g) utilisation d'une valeur d'image de l'image (Z) intermédiaire à la position (p', q') d'image modifiée pour la rétroprojection.

2. Procédé suivant la revendication 1, dans lequel l'état (MI) de mouvement initial correspond à une position (p) d'image de colonnes, qui se trouve sensiblement au centre de l'image (Z) intermédiaire et on choisit, de préférence, un tel état (MI) de mouvement initial pour chaque image (Z) intermédiaire.

3. Procédé suivant la revendication 2, dans lequel, comme centre, correspond dans l'image (Z) intermédiaire la colonne, qui se trouvait exactement au milieu de l'image dans l'une des images (P) de projection.

4. Procédé suivant l'une des revendications précédentes, dans lequel, lors de la rétroprojection des images (Z) intermédiaires, on choisit à l'avance, pour un nombre des images (Z) intermédiaires, en particulier pour chaque image (Z) intermédiaire, pour l'état (MI) de mouvement initial et au moins pour un état (M) de mouvement antérieur et au moins un état (M) de mouvement ultérieur, des données de mouvement à partir du profil (BP) de mouvement, on interpole, à partir des données de mouvement, les données de mouvement par rapport à l'état (M) de mouvement modifié et on calcule la position (x') modifiée du voxel (V) sur la base de ces données de mouvement interpolées par rapport à l'état (M) de mouvement modifié, dans lequel de préférence l'interpolation repose sur les états (M) de mouvement, qui sont les plus proches de l'état (M) de mouvement modifié, dans lequel de préférence la distance des positions d'images des états (M) de mouvement entre sous la forme d'une pondération.

5. Procédé suivant l'une des revendications précédentes, dans lequel, avant d'utiliser la valeur d'image pour la rétroprojection, on effectue entre les stades e) et f) au moins une fois les stades suivants :

  - calcul d'une position (p') d'image de colonnes modifiée ou le voxel (V) serait reproduit à la position (x') de voxel modifiée dans l'image (Z) intermédiaire,
  - détermination d'un état (M) de mouvement modifié du voxel (V) sur la base de la position (p') d'image de colonnes modifiée,
- calcul d'une position (x') de voxel modifiée du voxel (V) à partir de sa position (x) initiale de voxel et du profil (BP) de mouvement par rapport à l'état (M) de mouvement modifié.

6. Procédé suivant l'une des revendications précédentes, dans lequel, lors de l'établissement des images (Z) intermédiaires, il s'effectue un re-binning des colonnes des images (B) de projection, en ce sens que, pour une image (Z) intermédiaire, on utilise les colonnes des images (B) de projection, qui ont été enregistrées par des rayonnements X respectivement parallèles dans un plan orthogonalement aux colonnes.

7. Procédé suivant l'une des revendications précédentes, dans lequel on filtre les images (Z) intermédiaires pour un meilleur résultat de reconstruction, en particulier au moyen d'une convolution et/ou d'une transformation de Fourier, dans lequel, dans une convolution préférée, on calcule une image (Z) intermédiaire filtrée au moyen d'un noyau défini à l'avance, en particulier d'un filtre à rampe, comme par exemple, un noyau de Shepp Logan et/ou on soumet une image (Z) intermédiaire de préférence à une transformation de Fourier et on la multiplie dans l'espace de Fourier par un filtre adapté.

8. Procédé suivant l'une des revendications précédentes, dans lequel, après le calcul des images (S) panoramiques à partir des images (Z) intermédiaires, on effectue les stades suivants :

   i) reconstruction d'images (ZV) intermédiaires de comparaison à partir des images panoramiques sur la base du profil (BP) de mouvement,
   ii) comparaison des images (ZV) intermédiaires de comparaison aux images (Z) intermédiaires,
   iii) établissement d'images (S) panoramiques retouchées sur la base de la comparaison,
   iv) répétition par itération des stades i) à iii) avec les images (S) panoramiques établies respectivement en dernier.

9. Procédé suivant la revendication 8, dans lequel, lors de la reconstruction des images (ZV) intermédiaires de comparaison, on détermine, pour chaque point image de chaque image (ZV) intermédiaire de comparaison, les points image des images (ZV) intermédiaires de comparaison par les stades suivants :

   - calcul d'un rayon passant par le voxel (VB) image, à partir d'un point image de l'image (ZV) intermédiaire de comparaison,
   - détermination des données de mouvement pour un état (M) de mouvement correspondant à la position (p) d'image de colonnes dans l'image (ZV) intermédiaire de comparaison à partir du profil (BP) de mouvement,
   - déplacement des positions du rayon et des voxels (VB) d'image les uns par rapport aux autres conformément aux données de mouvement du profil (BP) de mouvement par rapport à l'état (M) de mouvement, dans lequel en particulier on déplace le rayon conformément aux données de mouvement,
   - accumulation de valeurs des voxels (VB) d'image le long du rayon avec le déplacement relatif du rayon et des voxels (VB) d'image,
   - prise en compte des valeurs accumulées pour la position (p, q) dans l'image (ZV) intermédiaire de comparaison.

10. Système (9) de compensation du mouvement dans la reconstruction CT, comprenant des moyens pour effectuer un procédé suivant l'une des revendications précédentes.

11. Dispositif (10) de commande pour la commande d'un système (1) de tomodensitométrie assisté par ordinateur comprenant un système suivant la revendication 10 et/ou conçu pour effectuer un procédé suivant l'une des revendications 1 à 9.

12. Système de tomodensitométrie assisté par ordinateur comprenant un dispositif (10) de commande suivant la revendication 11.

13. Produit de programme d'ordinateur comprenant un programme d'ordinateur, qui peut être chargé directement dans un dispositif de mémoire d'un dispositif (10) de commande d'un système (1) de tomodensitométrie assisté par ordinateur, comprenant des parties de programme pour exécuter tous les stades du procédé suivant l'une des revendications 1 à 9, lorsque le programme d'ordinateur est exécuté dans le dispositif (10) de commande du système (1) de tomodensitométrie assisté par ordinateur.

14. Support, déchiffrable par ordinateur, sur lequel sont mises en mémoire des parties de programme, qui peuvent être déchiffrées et réalisées par une unité informatique, afin d'exécuter tous les stades du procédé suivant l'une des revendications 1 à 9, lorsque les parties de programme sont exécutées par l'unité informatique.

FIG 1

EP 4 198 902 B1

# FIG 2

EP 4 198 902 B1

FIG 3

## FIG 4

## FIG 5

## FIG 6

FIG 7

B

20

p

q

Z

M   30   25   20   15   10

FIG 8

M            MI           M
27      M    20           13

p

q

$p_{min}$     p     $p_0$     $p_{max}$

FIG 9

0            >0            SdT            E

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON SCHÄFER et al.** Motioncompensated and gated cone beam filtered back-projection for 3-D rotational X-ray angiography. *IEEE Transactions on Medical Imaging*, July 2006, vol. 25 (7), 898-906
- **VON FELDKAMP** ; **DAVID** ; **KRESS**. Practical cone-beam algorithm. *J. Opt. Soc. Am. A*, 1984, vol. 1, 612-619
- **VON BRUDER et al.** Compensation of skull motion and breathing motion in CT using data-based and image-based metrics, respectively. *Proc. SPIE 9783, Medical Imaging 2016: Physics of Medical Imaging*, 22 March 2016, 97831E

- **J. HAHN et al.** Motion compensation in the region of the coronary arteries based on partial angle reconstructions from short-scan CT data. *Medical physics*, 2017, vol. 44 (11)
- Head Motion Correction Based on Filtered Backprojection in Helical CT Scanning. **JANG SEOKHWAN et al.** IEEE TRANSACTIONS ON MEDICAL IMAGING. IEEE, 15 November 2019, vol. 39, 1636-1645
- Weighted FBP - a simple approximate 3D FBP algorithm for multislice spiral CT with good dose usage for arbitrary pitch. *Physics in Medicine & Biology*, 2004, vol. 49 (11), 2209